# EUROPEAN PATENT SPECIFICATION

(11) **EP 3 520 059 B1**
(45) Date of publication and mention of the grant of the patent: **19.03.2025**
(21) Application number: 17860853.5
(22) Date of filing: 13.10.2017
(51) Int. Cl.: G06Q 20/34, G06Q 20/32, G06Q 20/40, H04M 1/725

(54) **ELECTRONIC DEVICE AND OPERATION METHOD REGISTERING AN ELECTRONIC CARD IN THE ELECTRONIC DEVICE**
ELEKTRONISCHE VORRICHTUNG UND BETRIEBSVERFAHREN ZUR REGISTRIERUNG EINER ELEKTRONISCHEN KARTE IN DER ELEKTRONISCHEN VORRICHTUNG
DISPOSITIF ÉLECTRONIQUE ET MODE DE FONCTIONNEMENT D'ENREGISTREMENT D'UNE CARTE ÉLECTRONIQUE DANS LE DISPOSITIF ÉLECTRONIQUE

(30) Priority: 13.10.2016 KR 20160132791
(43) Date of publication of application: 07.08.2019
(73) Proprietor: Samsung Electronics Co., Ltd., Suwon-si, Gyeonggi-do 16677 (KR)
(72) Inventor: JANG, Wooseok, Yongin-si, Gyeonggi-do 16938 (KR); KIM, Kyungduk, Seoul 06730 (KR)
(74) Representative: HGF
(86) International application number: PCT/KR2017/011325
(87) International publication number: WO 2018/070832

(56) References cited:
- WO-A1-2016/137300
- WO-A1-2016/137300
- KR-A- 20150 018 754
- KR-A- 20160 024 162
- KR-A- 20160 066 470
- KR-A- 20160 105 261
- KR-A- 20160 105 261
- US-A1- 2015 134 540

## Description

### Technical Field

The present disclosure relates generally to a method and device for registering an electronic card in an electronic device.

### Background Art

In recent years, electronic devices have been developed to provide a variety of services and functions, such as electronic payments including mobile payments and/or point accumulation and management of various kinds of memberships using electronic devices. For example, when a user purchases a product (or a service) in an online store or an offline store, an electronic device may be used to make a payment using an electronic card (or an application card) registered in an electronic payment service or application. In addition, after making a payment using an actual credit card or the electronic payment service, the user may accumulate and manage points based on the payment, using the electronic device.

Further, various payment methods carried out using a physical card, which is an offline payment means, are being replaced by online payment methods. Consequently, a new process has been developed, in which a user associates the physical card with the user's electronic device or a user's account and registers the information relating to the physical card in advance.

For example, a physical card may be registered by inputting a card number of the physical card in an electronic device (or a payment application of the electronic device) and completing a user authentication procedure via a text message or the like.

According to another example, a physical card may be registered by recognizing characters in a photograph of the physical card using a camera of an electronic device, such that the card information (e.g., a card number, an expiration date, etc.) may be automatically input, inputting the remaining additional part of the card information by the user, and then performing user authentication.

However, these conventional card registration methods require the user to have an actual physical card. For example, when a physical card is registered in an electronic device (e.g., a smartphone, a personal computer (PC), etc.) and a specific service (e.g., an electronic payment service) for use, in order to use the card in another electronic device or for another payment service, a user is still required to have the actual card for card registration in the another electronic device or for the another payment service.

Further, in recent years, there has been an increase in the number of users who use electronic cards together with electronic devices. Accordingly, there is increasing demand for services (or functions) that improve the convenience of card registration and management using electronic devices.

WO 2016/137300 A1 relates to an electronic device and a payment function thereof.

### Disclosure of Invention

### Solution to Problem

Accordingly, the present disclosure is designed to address at least the problems and/or disadvantages described above and to provide at least the advantages described below.

An aspect of the present disclosure is to provide a method and device capable of registering a card in an electronic device based on information associated with the card.

Another aspect of the present disclosure is to provide a method and device capable of conveniently registering various cards (e.g., a credit card, a prepaid card, a point card, etc.) in an electronic device (or an application executed on an electronic device).

Another aspect of the present disclosure is to provide a method and device for a user to more conveniently register a physical card as an electronic card by minimizing and/or omitting separate input procedures for card registration in an electronic device by using a text message received based on card use by the user.

Another aspect of the present disclosure is to provide a method and device capable of automatically registering, as an electronic card, an actual card used by a user based on user agreement associated with the actual card.

In accordance with an aspect of the present disclosure, an electronic device is provided, which includes a wireless communication unit configured to perform wireless communication with an external server; and a processor configured to detect reception of a card-related message; determine whether to register a card related to the card-related message as an electronic card; acquire card information associated with the card related to the card-related message, in response to determining to register the card as the electronic card; and register the card as the electronic card in the electronic device, by using the card information, wherein the card-related message relates to a payment request or a card-use-related message and includes card-associated information.

In accordance with another aspect of the present disclosure, an operation method of an electronic device is provided, which includes detecting reception of a card-related message; determining whether to register a card related to the card-related message as an electronic card; acquiring card information associated with the card related to the card-related message, in response to determining to register the card as the electronic card; and registering the card as the electronic card in the electronic device, by using the card information, wherein the card-related message relates to a payment request or a card-use-related message and includes card-associated information.

### Brief Description of Drawings

The above and other aspects, features, and advantages of certain embodiments of the present disclosure will be more apparent from the following detailed description taken in conjunction with the accompanying drawings, in which:
FIG. 1 illustrates a network environment including an electronic device according to an embodiment of the present disclosure;
FIG. 2 illustrates an electronic device according to an embodiment of the present disclosure;
FIG. 3 illustrates a program module according to an embodiment of the present disclosure;
FIG. 4 is a flowchart illustrating a method of registering a card in an electronic device according to an embodiment of the present disclosure;
FIG. 5 is a flowchart illustrating a method of registering a card based on card-associated information in an electronic device according to an embodiment of the present disclosure;
FIGs. 6 and 7 illustrate examples of screen images of a card-related message in an electronic device according to an embodiment of the present disclosure;
FIGs. 8 and 9 illustrate examples of screen images of a guide associated with card registration in an electronic device according to an embodiment of the present disclosure;
FIGs. 10, 11 and 12 illustrate procedures of registering a card in a system according to embodiments of the present disclosure;
FIGs. 13, 14 and 15 illustrate procedures of registering a card in a system according to embodiments of the present disclosure;
FIGs. 16, 17 and 18 illustrate procedures of registering a card in an electronic device according to embodiments of the present disclosure; and
FIG. 19 illustrates a procedure of registering a card in a system according to an embodiment of the present disclosure.

### Best Mode for Carrying out the Invention

Hereinafter, various embodiments of the present disclosure will be described with reference to the accompanying drawings. However, there is no intent to limit the present disclosure to the particular forms disclosed herein; rather, the present disclosure should be construed to cover various modifications, equivalents, and/or alternatives of embodiments of the present disclosure.

In describing the drawings, similar reference numerals may be used to designate similar constituent elements.

The expressions and terms used in the present disclosure are only used to describe specific embodiments, and are not intended to limit the present disclosure. As used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Terms defined in a general dictionary may be interpreted to have meanings consistent with the contextual meanings in the relevant field of art, and should not to be interpreted to have ideal or excessively formal meanings unless clearly defined in the present disclosure. In some cases, even terms that are defined in the present disclosure should not be interpreted to exclude embodiments of the present disclosure.

Herein, expressions, such as "have", "may have", "include", and "may include" refer to the existence of corresponding features (e.g., numeral, function, operation, or constituent element such as component), but do not exclude one or more additional features. The expression "A or B", "at least one of A or/and B", or "one or more of A or/and B" may include all possible combinations of the items listed. For example, the expressions "A or B", "at least one of A and B", and "at least one of A or B" refer to (1) at least one A, (2) at least one B, or (3) at least one A and at least one B.

Numerical expressions, such as "first", "second", "third", etc., may modify various components regardless of the order and/or the importance components, but do not limit the corresponding components. For example, a first user device and a second user device indicate different user devices although both of them are user devices. For example, a first element may be referred to as a second element, and similarly, a second element may be referred to as a first element without departing from the scope of the present disclosure.

When an element (e.g., a first element) is referred to as being (operatively or communicatively) "connected," or "coupled," to another element (e.g., a second element), the first element may be directly connected or coupled directly to the second element, or another element (e.g., a third element) may be interposer therebetween. However, when the first element is referred to as being "directly connected," or "directly coupled" to the second element, no elements are interposed therebetween.

The expression "configured to" may be interchangeably used with, for example, "suitable for", "having the capacity to", "designed to", "adapted to", "made to", or "capable of" according to context. The expression "configured to" does not necessarily mean "specifically designed to" in hardware. For example, the expression "a device configured to" may mean that the device, together with other devices or components, "is able to" perform a recited operation. Similarly, the phrase "a processor adapted (or configured) to perform A, B, and C" may mean a dedicated processor (e.g., an embedded processor) for performing the corresponding operations or a generic-purpose processor (e.g., a central processing unit (CPU) or an application processor (AP)) that can perform the corresponding operations by executing one or more software programs stored in a memory device.

An electronic device according to an embodiment of the present disclosure may include a smart phone, a tablet PC, a mobile phone, a video phone, an electronic book reader (e-book reader), a desktop PC, a laptop PC, a netbook computer, a workstation, a server, a personal digital assistant (PDA), a portable multimedia player (PMP), a moving picture experts group (MPEG)-1 audio layer-3 (MP3) player, a mobile medical device, a camera, and a wearable device. A wearable device may include an accessory type device (e.g., a watch, a ring, a bracelet, an anklet, a necklace, a glasses, a contact lens, or a head-mounted device (HMD)), a fabric or clothing integrated type device (e.g., electronic clothing), a body-mounted type device (e.g., a skin pad or tattoo), and a bio-implantable type device (e.g., an implantable circuit).

The electronic device may also be a home appliance, such as a television, a digital video disk (DVD) player, an audio receiver, a refrigerator, an air conditioner, a vacuum cleaner, an oven, a microwave oven, a washing machine, an air cleaner, a set-top box, a home automation control panel, a security control panel, a TV box (e.g., Samsung HomeSync^{™}, Apple TV^{™}, or Google TV^{™}), a game console (e.g., Xbox^{™} and PlayStation^{™}), an electronic dictionary, an electronic key, a camcorder, and an electronic photo frame.

The electronic device may also include a medical device (e.g., a portable medical measuring device, such as a blood glucose monitoring device, a heart rate monitoring device, a blood pressure measuring device, a body temperature measuring device, etc., a magnetic resonance angiography (MRA) device, a magnetic resonance imaging (MRI) device, a computed tomography (CT) device, and an ultrasonic device), a navigation device, a global positioning system (GPS) receiver, an event data recorder (EDR) device, a flight data recorder (FDR) device, a vehicle infotainment device, an electronic device for a ship (e.g., a navigation device for a ship and a gyro-compass), an avionics device, a security device, an automotive head unit, a robot for home or industry, an automatic teller machine (ATM), a point of sales (POS) device, or an Internet of things (IoT) device (e.g., a light bulb, a sensor, an electric or gas meter, a sprinkler device, a fire alarm, a thermostat, a streetlamp, a toaster, a sporting goods, a hot water tank, a heater, a boiler, etc.).

The electronic device may also include a part of furniture or a building/structure, an electronic board, an electronic signature receiving device, a projector, and various kinds of measuring instruments (e.g., a water meter, an electric meter, a gas meter, and a radio wave meter).

The electronic device may be a flexible device.

The electronic device may also be a combination of one or more of the aforementioned various devices. However, the electronic device is not limited to the aforementioned devices, and may include a new electronic device according to the development of technology.

Herein, the term "user" may indicate a person who uses an electronic device or a device (e.g., an artificial intelligence electronic device) that uses an electronic device.

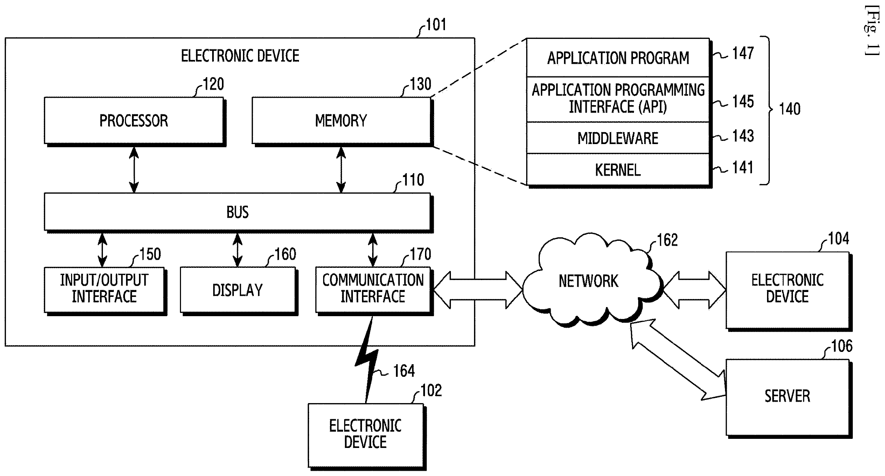

FIG. 1 illustrates a network environment including an electronic device according to an embodiment of the present disclosure.

Referring to FIG. 1, the electronic device 101 includes a bus 110, a processor 120, a memory 130, an input/output interface 150, a display 160, and a communication interface 170. Alternatively, the electronic device 101 may omit at least one of the above components or may further include other components.

The bus 110 may include a circuit which interconnects the components 110 to 170 and delivers information (e.g., a control message and/or data) between the components 110 to 170.

The processor 120 may include one or more of a CPU, an AP, and a Communication Processor (CP). The processor 120 may perform calculation or data processing relating to control and/or communication of at least one other component of the electronic device 101.

The memory 130 may include a volatile memory and/or a non-volatile memory. The memory 130 may store commands or data relevant to at least one other component of the electronic device 101.

The memory 130 stores software and/or a program 140. The program 140 includes a kernel 141, middleware 143, an Application Programming Interface (API) 145, and an application program (or "application") 147. At least some of the kernel 141, the middleware 143, and the API 145 may be referred to as an operating system (OS).

The memory 130 may store one or more programs executed by the controller 120, and may perform a function of temporarily storing inputted/outputted data. Input/ output data may include various pieces of data related to device authentication (e.g., an authenticator, device information, and authentication keys (e.g., a symmetric key and a public key), a moving image, a still image, a picture, or an audio file. The memory 130 may store acquired data. Data acquired in real time may be stored in a temporary storage device (e.g., buffer). Data that is determined to be stored may be stored in a storage device, which can store data for a long time. The memory 130 may include a computer readable recording medium to record one or more programs executed by the controller 120.

The kernel 141 may control or manage system resources (e.g., the bus 110, the processor 120, or the memory 130) used for performing an operation or function implemented in the other programs (e.g., the middleware 143, the API 145, or the application programs 147). Further, the kernel 141 may provide an interface through which the middleware 143, the API 145, or the application programs 147 may access the individual components of the electronic device 101 to control or manage the system resources.

The middleware 143 may serve as an intermediary for the API 145 or the application programs 147 to communicate with the kernel 141 to exchange data. The middleware 143 may process one or more task requests received from the application programs 147 according to priorities thereof. For example, the middleware 143 may assign priorities for using the system resources (e.g., the bus 110, the processor 120, the memory 130, etc.) of the electronic device 101, to at least one of the application programs 147. For example, the middleware 143 may perform scheduling or loading balancing on the one or more task requests by processing the one or more task requests according to the priorities assigned thereto.

The API 145 is an interface through which the applications 147 control functions provided from the kernel 141 or the middleware 143, and may include at least one interface or function (e.g., instruction) for file control, window control, image processing, character control, etc.

The input/output interface 150 may function as an interface that may transfer commands or data input from a user or another external device to the other element(s) of the electronic device 101. Further, the input/output interface 150 may output the commands or data received from the other element(s) of the electronic device 101 to the user or another external device. For example, a wire/wireless headphone port, an external charger port, a wire/wireless data port, a memory card port, an audio input/ output port, a video input/output port, an earphone port, etc., may be included in the interface 150.

Examples of the display 160 may include a liquid crystal display (LCD), a light-emitting diode (LED) display, an organic light-emitting diode (OLED) display, active matrix OLED (AMOLED), a microelectromechanical systems (MEMS) display, and an electronic paper display. The display 160 may display various types of content (e.g., text, images, videos, icons, or symbols) to users. The display 160 may include a touch screen, and may receive a touch, gesture, proximity, or hovering input using an electronic pen or a user's body part.

The display 160 may show a visual output to the user. The visual output may be displayed in the form of a text, a graphic, or a video or a combination thereof. The display 160 may display (output) a variety of information processed in the electronic device 101. For example, the display 160 may display a user interface (UI) or a graphic UI (GUI) related to the use of the electronic device 101.

A display 160 may display various user interfaces (e.g., a UI or a GUI) associated with operations performed by an electronic device 101.

The display 160 may include a flat display or a curved display, which can be curved, bent, or rolled without damage, using a substrate that is thin and flexible like paper. A curved display may be coupled to a housing (or bezel or body) to maintain a curved shape. The electronic device 101 may be implemented as a display device in the form of a curved display and a flexible display which may be bent and stretched freely. The display 160 may provide flexibility so as to be foldable and unfoldable, by replacing a glass substrate wrapping liquid crystal with a plastic film, in an LCD, an LED, an OLED, an AMOLED, an active matrix OLED, etc. The display 160 may extend to at least one side (e.g., at least one of the left side, the right side, the top side, and the bottom side) of the electronic device 101, and may be folded up to a curvature radius at which the curved display remains operable (e.g., a curvature radius of 5 cm, 1 cm, 7.5 mm, 5 mm, 4 mm, etc.) so as to be coupled to the side of the housing.

The communication interface 170 may establish communication between the electronic device 101 and a first external electronic device 102, a second external electronic device 104, and/or a server 106. For example, the communication interface 170 may be connected to a network 162 through wireless communication or wired communication to communicate with the second external electronic device 104 and/or the server 106.

The wireless communication may include cellular communication using long-term evolution (LTE), LTE Advanced (LTE-A), code division multiple access (CDMA), wideband CDMA (WCDMA), universal mobile telecommunications system (UMTS), wireless broadband (WiBro), global system for mobile communications (GSM), etc.

The wireless communication may also include WiFi, light fidelity (LiFi), wireless gigabit alliance (WiGig), Bluetooth, Bluetooth low energy (BLE), Zigbee, near field communication (NFC), magnetic secure transmission, radio frequency (RF), a body area network (BAN), etc.

The wireless communication may include global navigation satellite system (GNSS), for example, GPS, global navigation satellite system (Glonass), BeiDou navigation satellite system (BeiDou), or Galileo, the European global satellite-based navigation system. Hereinafter, GPS and GNSS may be interchangeably used.

The wired communication may include a universal serial bus (USB), a high-definition multimedia interface (HDMI), a recommended standard-232 (RS-232), power line communication, or a plain old telephone service (POTS).

The network 162 may include at least one of telecommunications networks, e.g., a computer network (e.g., local area network (LAN) or wide area network (WAN)), an internet, or a telephone network.

Each of the first and second external electronic devices 102 and 104 may be the same or different type of device as or from the electronic device 101 (for example, a smart phone, a tablet PC, a remote controller, etc.).

All or a part of the operations that the electronic device 101 will perform may be executed by at least one other electronic device (e.g., the first external electronic device 102, the second external electronic device 104, and/or the server 106). For example, when the electronic device 101 executes a function or service (automatically or in response to a request), the electronic device 101 may request at least a portion of a function associated with the electronic device 101 be performed by the first external electronic device 102, the second external electronic device 104, and/or the server 106. The first external electronic device 102, the second external electronic device 104, and/or the server 106 may execute the requested function or additional function and may transmit the execution result to the electronic device 101. The electronic device 101 may provide the requested function or service using the received result or may additionally process the received result to provide the requested function or service. To achieve this, cloud computing, distributed computing, or client-server computing may be used.

The server 106 may include at least one of a payment server, a card company server, a bank server, an authentication server, an application server, a management server, an integration server, a provider server (or a communication service provider server), a content server, an Internet server, a cloud server, etc. The server 106 may include one or more servers (e.g., a payment server, an authentication server, etc.) associated with registering an electronic card in the electronic device 101, may implement each of different services (e.g., payment, authentication, etc.) via each server, or may be implemented as a single server capable of integrating and processing each of the different services.

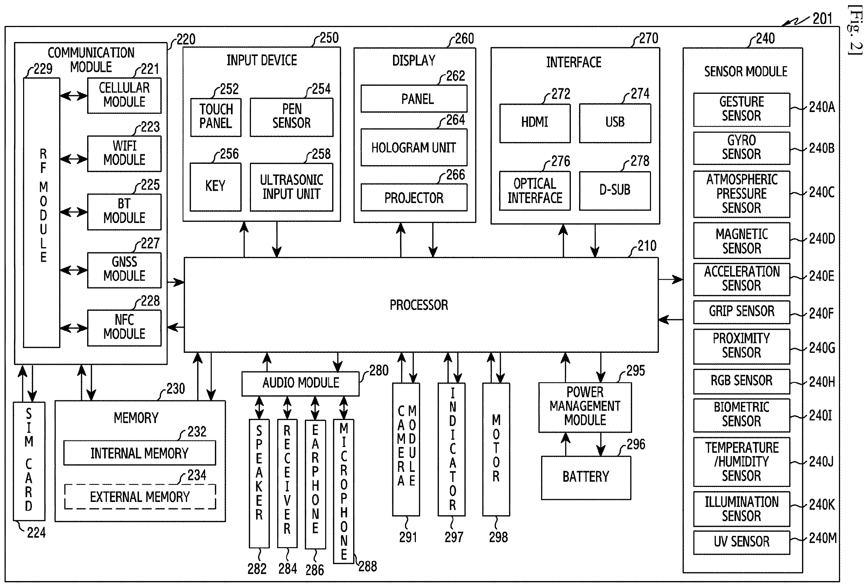

FIG. 2 illustrates an electronic device according to an embodiment of the present disclosure.

Referring to FIG. 2, the electronic device 201 includes a processors 210 (e.g., an AP), a communication module 220, a subscriber identification module (SIM) card 224, a memory 230, a sensor module 240, an input device 250, a display 260, an interface 270, an audio module 280, a camera module 291, a power management module 295, a battery 296, an indicator 297, and a motor 298. Alternatively, the electronic device 201 may a greater or smaller number of elements than the elements illustrated in FIG. 2. For example, the electronic device 201 may omit some of the illustrated elements depending on the type thereof. The above-described elements of the electronic device 201 may be seated on the housing (or bezel or body) of the electronic device 201, or may be formed on the outside thereof.

The processor 210 may control a plurality of hardware or software components connected to the processor 210 by driving an OS or an application program, processing of various data, and performing calculations. The processor 210 may be embodied as, for example, a system on chip (SoC).

The processor 210 may include a Graphic Processing Unit (GPU) and/or an image signal processor. The processor 210 may include at least some of the other components illustrated in FIG. 2 (e.g., a cellular module 221). The processor 210 may load, into a volatile memory, commands or data received from at least one of the other components (e.g., a non-volatile memory) and may process the loaded commands or data, and may store various data in a non-volatile memory.

The processor 210 may control the overall operation of the electronic device 201. The processor 210 may include one or more processors. For example, the processor 210 may include a CP, an AP, an interface (e.g., a general purpose input/output (GPIO)), an embedded memory, etc., as separate elements. Alternatively, the CP, the AP, the interface, the embedded memory, etc., may be integrated into one or more integrated circuits (ICs).

The AP may execute various software programs to perform various functions for the electronic device 201, and the CP may perform control and processing for voice communication and data communication.

The processor 210 may execute a specific software module (e.g., an instruction set) stored in a memory 230, and may perform various functions corresponding to the module.

The processor 210 may control the operation of a hardware module, such as the audio module 280, the interface 270, the display 260, the camera module 291, the communication module 220, etc. The processor 210 may be electrically connected with the display 260 and the memory 230.

The processor 210 may process a card registration operation. For example, the processor 210 may control operations of detecting reception of a message; determining whether the message is a card-related message; when the message is a card-related message, determining whether to register a card related to the message as an electronic card; acquiring card information associated with the card related to the message in response to registration determination; and registering the card related to the message as an electronic card in the electronic device, by using the card information.

The processor 210 may process various operations associated with parsing a message; extracting card-associated information; determining whether the message is transmitted by a set external server, based on the card-associated information; and proceeding a card registration procedure based on a determination result.

The communication module 220 includes the cellular module 221, a Wi-Fi module 223, a Bluetooth (BT) module 225, a GNSS module 227, an NFC module 228, and a radio frequency (RF) module 229. Additionally or alternatively, the communication module 220 may include a WiGig module, a LiFi module, etc. The WiFi module 223 and the WiGig module may be integrated into a single chip.

The cellular module 221 may provide voice communication, video communication, a messaging service, an Internet service, etc., through a communication network. The cellular module 221 may perform discrimination and authentication of the electronic device 201 within a communication network using the SIM card 224. The cellular module 221 may perform at least a portion of functions that the processor 210 provides. The cellular module 221 may include a CP. At least two or more of the cellular module 221, the Wi-Fi module 223, the Bluetooth module 225, the GNSS module 227, and the NFC module 228 may be included within one IC or an IC package. Alternatively, the electronic device 201 may omit the cellular module 221.

The RF module 229 may transmit and receive a communication signal (e.g., an RF signal). The RF module 229 may include a transceiver, a power amplifier module (PAM), a frequency filter, a low noise amplifier (LNA), an antenna, etc. At least one of the cellular module 221, the Wi-Fi module 223, the Bluetooth module 225, the GNSS module 227, or the NFC module 228 may transmit and receive an RF signal through a separate RF module.

The WiFi module 223 may be a module for wirelessly connecting to the Internet and forming a wireless LAN link with an external device. The WiFi module 223 may be embedded inside or provided outside the electronic device 201. Wireless Internet technology may use WiFi, LiFi, WiGig, Wibro, world interoperability for microwave access (WiMax), high speed downlink packet access (HSDPA), or millimeter wave (mmWave). The WiFi module 223 may transmit or receive various data of the electronic device 201 to or from an external electronic device by interworking with the external device that is connected with the electronic device 201, via a network (e.g., a wireless Internet network). The WiFi module 223 may maintain an on state or may be turned on/off according to settings of the electronic device 201 or a user input.

The Bluetooth module 225 and the NFC module 228 are short range communication modules for performing short range communication. The short range communication technology may use Bluetooth, BLE, RF identification (RFID), Infrared Data Association (IrDA), ultra wideband (UWB), ZigBee, NFC, etc. The short range communication module may transmit or receive various data of the electronic device 201 to or from an external device by interworking with the external device connected with the electronic device 201 via a network (e.g., a short range communication network). The short range communication module (e.g., the Bluetooth module 225 and the NFC module 228) may maintain an on state or may be turned on/off according to settings of the electronic device 201 or a user input.

The SIM card 224 may include a subscriber identification module, and may include unique identification information (e.g., an IC card identifier (ICCID)) or subscriber information (e.g., integrated mobile subscriber identity (IMSI)). Alternatively, the electronic device 210 may omit the subscriber identification module 224.

The memory 230 includes an internal memory 232 and an external memory 234. The internal memory 232 may include at least one of a volatile memory (e.g., a dynamic random access memory (DRAM), a static RAM (SRAM), or a synchronous DRAM (SDRAM)), and a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory, a hard drive, or a solid state drive (SSD)). The external memory 234 may include a flash drive, a compact flash (CF), a secure digital (SD), a micro secure digital (Micro-SD), a mini secure digital (Mini-SD), an extreme digital (xD), a multimedia card (MMC), a memory stick, etc. The external memory 234 may be functionally or physically connected to the electronic device 201 through various interfaces.

The memory 230 may store one or more programs, data, or instructions associated with causing the processor 210 to detect reception of a message, determine whether the message is a card-related message, determine whether to register a card related to the message as an electronic card when the message is a card-related message, acquire card information associated with the card related to the message in response to registration determination, and register the card related to the message as an electronic card in the electronic device, by using the card information. The memory 230 may store one or more programs, data, or instructions associated with causing the processor 210 to parse a message, extract card-associated information, determine based on the card-associated information whether the message is transmitted by a set external server, and determine to proceed a card registration procedure based on a determination result.

The memory 230 may include an expandable memory (e.g., the external memory 234) or an internal memory 232. The electronic device 201 may also operate in relation to web storage performing a storage function of the memory 230 over the Internet.

The memory 230 may store one or more pieces of software (or software modules). The software components may include an OS software module, a communication software module, a graphic software module, a user interface software module, an MPEG module, a camera software module, or one or more application software modules (e.g., an authentication module and a biometric recognition module). Further, since the module, which is a software component, may be expressed as a set of instructions, the module may also be expressed as an instruction set. The module may also be expressed as a program.

The memory 230 may include an additional module (instructions) as well as the above-described modules. Alternatively, the memory 230 may omit some modules (instructions), if unnecessary.

The OS software module may include various software components for controlling overall system operation. Controlling overall system operation includes, for example, managing and controlling the memory, controlling and managing storage hardware (devices), and controlling and managing power. Further, the OS software module may perform a function of smoothly supporting communication between various hardware (devices) and software components (modules).

The communication software module may perform communication with another electronic device, such as a wearable device, a smart phone, a computer, a server, or a portable terminal, through the communication module 220 or the interface 270. Further, the communication software module may be formed in a protocol structure corresponding to a corresponding communication scheme.

The graphic software module may include various software components for providing and displaying graphics on the display 260. Herein, the term "graphics" includes text, a web page, an icon, a digital image, video, an animation, etc.

The UI software module may include various software components related to a UI. For example, the UI software module may include content indicating how the state of the UI is changed or indicating the conditions under which the change in the state of the UI is made.

The MPEG module may include a software component for performing digital content (e.g., video and audio data)-related processes and functions (e.g., generation, reproduction, distribution, and transmission of content).

The camera software module may include a camera-related software component which enables camera-related processes and functions.

The application module may include a web browser including a rendering engine, email, instant messaging, word processing, keyboard emulation, an address book, a touch list, widgets, digital rights management (DRM), iris scan, context cognition, voice recognition, position-determining function, location-based service, etc. The application module may include an application module for performing authentication between electronic devices based on user's biometric information.

The sensor module 240 may measure a physical quantity or may detect an operation state of the electronic device 201, and may convert the measured or detected information to an electric signal. The sensor module 240 includes a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red, green, blue (RGB) sensor), a biometric sensor 2401, a temperature/humidity sensor 240J, an illumination sensor 240K, and an ultraviolet (UV) sensor 240M. Additionally or alternatively, the sensor module 240 may include an E-nose sensor, an electromyography sensor (EMG) sensor, an electroencephalogram (EEG) sensor, an electrocardiogram (ECG) sensor, an infrared (IR) sensor, an iris scan sensor, and/or a fingerprint scan sensor. The sensor module 240 may further include a control circuit for controlling at least one sensor included therein. The electronic device 201 may further include a processor, which is a part of the processor 210 or a separate element from the processor 210 and is configured to control the sensor module 240. The processor may control the sensor module 240 while the processor 210 remains in a sleep state.

The input device 250 includes a touch panel 252, a (digital) pen sensor 254, a key 256, and an ultrasonic input device 258. The touch panel 252 may use at least one of capacitive, resistive, infrared and ultrasonic detecting methods. The touch panel 252 may further include a control circuit and/or a tactile layer to provide a tactile reaction to a user.

The (digital) pen sensor 254 may be a part of a touch panel or may include an additional sheet for recognition.

The key 256 may include a physical button, an optical key, a keypad, etc.

The ultrasonic input device 258 may detect an ultrasonic wave, which is generated from an input tool, e.g., through a microphone 288, and may check data corresponding to the detected ultrasonic wave.

The input device 250 may include an electronic pen. The input device 250 may be implemented to receive a force touch.

The display 260 includes a panel 262, a hologram device (unit) 264, and a projector 266. The display 260 may also include a control circuit for controlling the aforementioned elements.

The panel 262 may be implemented to be flexible, transparent, or wearable. The panel 262 and the touch panel 252 may be integrated into one or more modules. The panel 262 may include a pressure sensor (or a force sensor) for measuring an intensity of pressure on a user's touch. The pressure sensor may be integrated into the touch panel 252 or may be implemented with one or more sensors separate from the touch panel 252.

The panel 262 may be seated in the display 260 and may sense a user input proximity to or contact with the surface of the display 260. The user input may include a touch input or a proximity input based on at least one of a single-touch, a multi-touch, a hovering, or an air gesture. The panel 262 may receive a user input to initiate an operation relating to use of the electronic device 201, and may generate an input signal in response to the user input. The panel 262 may be configured to convert a change, such as capacitance generated in a particular part of the display 260 or a pressure applied to a particular part of the display 260, into an electrical input signal. The panel 262 may detect a position and an area on the surface of display 260, that an input tool (e.g., a user finger, an electronic pen, etc.) touches or is close to. Further, the panel 262 may be implemented to additionally detect pressure during touch (e.g., a force touch) depending on the applied touch method.

The hologram device 264 may display a stereoscopic image in a space using a light interference phenomenon.

The projector 266 may project light onto a screen so as to display an image. The screen may be arranged inside or outside the electronic device 201.

The interface 270 includes an HDMI 272, a USB 274, an optical interface 276, and a D-subminiature (D-sub) 278. Additionally or alternatively, the interface 270 may include a mobile high definition link (MHL) interface, an SD card/ multi-media card (MMC) interface, or an IrDA standard interface.

The interface 270 may receive data or power from another electronic device and transfer the data and the power to each of the elements inside the electronic device 201. The interface 270 may cause data within the electronic device 201 to be transmitted to another electronic device. For example, the interface 270 may include a wired/wireless headset port, an external charger port, a wired/wireless data port, a memory card port, an audio input/output port, a video input/output port, an earphone port, etc.

The audio module 280 may convert a sound and an electric signal in dual directions. The audio module 280 may process sound information that is inputted or outputted through a speaker 282, a receiver 284, an earphone 286, or the microphone 288. The audio module 280 may transmit an audio signal received from the processor 210 to an output device (e.g., the speaker 282, the receiver 284, or the earphone 286), and may transmit an audio signal, e.g., a voice, which is received from an input device (e.g., the microphone 288) to the processor 210. The audio module 280 may convert voice/audio data into an audible sound and output the audible sound through the output device under the control of the processor 210, and may convert an audio signal received from the input device into a digital signal and transmit the digital signal to the processor 210.

The speaker 282 or the receiver 284 may output audio data which is received from the communication module 220 or stored in the memory 230. The speaker 282 or the receiver 284 may output an audio signal related to various operations (functions) performed in the electronic device 201.

The microphone 288 may receive an external audio signal and may process the audio signal into electric voice data. The microphone 288 may implement various noise reduction algorithms for removing a noise occurring in the process of receiving an external audio signal. The microphone 288 may serve to input an audio streaming, such as a voice command.

The camera module 291 may be a device for shooting a still image or a video, and may include at least one image sensor (e.g., a front sensor or a rear sensor), a lens, an image signal processor (ISP), or a flash (e.g., an LED or a xenon lamp).

The camera module 291 supports a photographing function of the electronic device 201. The camera module 291 may capture any subject under the control of the processor 210 and deliver photographed data (e.g., an image) to the display 260 and the processor 210. The camera module 291 may include a first camera (e.g., a color (RGB) camera) for acquiring color information and a second camera (e.g., an infrared (IR) camera) for acquiring depth information (e.g., location information of a subject, and distance information). The camera module 291 may include an image sensor. The image sensor may be implemented as a charge-coupled device (CCD) or a complementary metal-oxide semiconductor (CMOS). The first camera may be a front camera provided on the front surface of the electronic device 201. Alternatively, the front camera may be replaced by the second camera, and may not be provided on the front surface of the electronic device 201. Alternatively, the first camera may be placed together with the second camera on the front surface of the electronic device 201. The first camera may be a rear camera provided on the rear surface of the electronic device 201. The first camera may be configured to include both a front camera and a rear camera, which are provided on the front surface and the rear surface of the electronic device 201, respectively.

The power management module 295 may manage power of the electronic device 201. The power management module 295 may include a power management IC (PMIC), a charger IC, or a battery gauge.

The PMIC may utilize a wired charging method and/or a wireless charging method. The wireless charging method may include a magnetic resonance method, a magnetic induction method, or an electromagnetic wave method. The PMIC may further include an additional circuit for wirelessly charging, e.g., a coil loop, a resonance circuit, or a rectifier. The battery gauge may measure a remaining capacity of the battery 296 and/or a voltage, current, or temperature of the battery 296, while the battery 296 is charged. The battery 296 may include a rechargeable battery and/or a solar battery.

The indicator 297 may display a specific state of the electronic device 201 or a portion thereof (e.g., a processor 210), such as a booting state, a message state, a charging state, etc.

The motor 298 may convert an electrical signal into a mechanical vibration and may generate vibration, a haptic effect, and the like.

The electronic device 201 may include a mobile TV supporting device (e.g., a GPU) for processing media data according to the standards of digital multimedia broadcasting (DMB), digital video broadcasting (DVB), MediaFlo^{™}, etc.

Each of the elements described in the present disclosure may be configured with one or more components, and the names of the elements may be changed according to the type of the electronic device. Some elements of the electronic devices illustrated in FIGs. 1 and 2 may be omitted or other additional elements may be added. Further, some of the elements may be combined with each other so as to form one entity, and the functions of the elements may be performed in the same manner as before being combined.

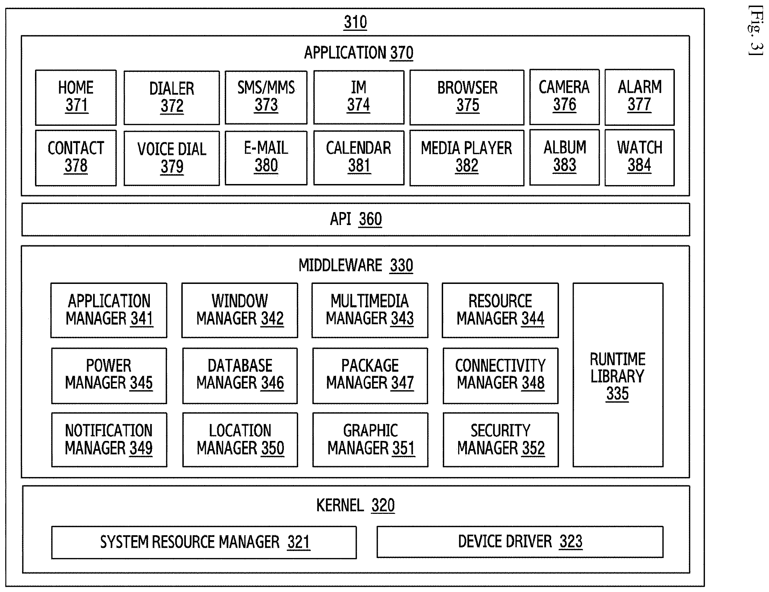

FIG. 3 illustrates a program module according to an embodiment of the present disclosure.

Referring to FIG. 3, the program module 310 may include an OS for controlling resources related to an electronic device and/or various applications executed in the OS. The OS may be Android^{™}, iOS^{™}, Windows^{™}, Symbian^{™}, Tizen^{™}, Bada^{™}, etc.

The program module 310 includes a kernel 320, middleware 330, an API 360, and applications 370. At least some of the program module 310 may be preloaded on an electronic device, or may be downloaded from an external electronic device. The kernel 320 includes a system resource manager 321 and a device driver 323. The system resource manager 321 may control, allocate, or collect system resources. The system resource manager 321 may include a process management unit, a memory management unit, a file system management unit, etc. The device driver 323 may include a display driver, a camera driver, a Bluetooth driver, a shared memory driver, a USB driver, a keypad driver, a Wi-Fi driver, an audio driver, or an Inter-Process Communication (IPC) driver.

The middleware 330 may provide a function required in common by the applications 370, or may provide various functions to the applications 370 through the API 360 so as to enable the applications 370 to efficiently use the limited system resources in the electronic device.

The middleware 330 includes a run time library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module, which is used by a compiler to add a new function through a programming language while an application 370 is being executed. The runtime library 335 may perform input/output management, memory management, the functionality for an arithmetic function, etc.

The application manager 341 may manage a life cycle of at least one of the applications 370.

The window manager 342 may manage GUI resources used by a screen.

The multimedia manager 343 may recognize a format required for reproduction of various media files, and may perform encoding or decoding of a media file by using a codec suitable for the corresponding format.

The resource manager 344 may manage resources of a source code, a memory, and a storage space of at least one of the applications 370.

The power manager 345 may manage battery capacity, temperature, or power, and may determine or provide power information required for the operation of the electronic device based on corresponding information. The power manager 345 may operate in conjunction with a basic input/output system (BIOS).

The database manager 346 may generate, search for, and/or change a database to be used by at least one of the applications 370.

The package manager 347 may manage installation or an update of an application distributed in a form of a package file.

The connectivity manager 348 may manage wireless connectivity, such as Wi-Fi or Bluetooth.

The notification manager 349 may display or notify of an event, such as an arrival message, promise, proximity notification, etc.

The location manager 350 may manage location information of an electronic device.

The graphic manager 351 may manage a graphic effect which will be provided to a user, or a user interface related to the graphic effect.

The security manager 352 may provide security functions for system security, user authentication, etc.

When the electronic device has a telephone call function, the middleware 330 may include a telephony manager for managing a voice call function or a video call function of the electronic device.

The middleware 330 may include a middleware module that forms a combination of various functions of the above-described components. The middleware 330 may provide a module specialized for each type of OS in order to provide a differentiated function. Further, the middleware 330 may dynamically remove some of the existing components or add new components.

The API 360 may be a set of API programming functions, and may be provided with a different configuration according to an OS. For example, for Android or iOS, one API set may be provided for each platform. For Tizen, two or more API sets may be provided for each platform.

The applications 370 include a home application 371, a dialer application 372, an SMS/MMS application 373, an instant message application (IM) 374, a browser application 375, a camera application 376, an alarm application 377, a contacts application 378, a voice dial application 379, an email application 380, a calendar application 381, a media player application 382, an album application 383, a clock application 384. The applications 370 may include a health care application (e.g., an application for measuring exercise quantity or blood sugar), or an environment information application (e.g., an application providing atmospheric pressure, humidity, or temperature information), a payment application, a card registration application, a card company application, or a bank application.

The applications 370 may include an information exchange application that supports exchanging information between the electronic device and an external electronic device. The information exchange application may include a notification relay application for transferring specific information to an external electronic device or a device management application for managing an external electronic device.

The notification relay application may include a function of transferring, to the external electronic device, notification information generated from other applications of the electronic device (e.g., an SMS/MMS application, an e-mail application, a health management application, or an environmental information application). Further, the notification relay application may receive notification information from an external electronic device and provide the received notification information to a user.

The device management application may manage (e.g., install, delete, or update) at least one function of an external electronic device communicating with the electronic device (e.g., a function of turning on/off the external electronic device itself (or some components) or a function of adjusting the brightness (or a resolution) of the display), applications operating in the external electronic device, and services provided by the external electronic device (e.g., a call service or a message service).

The applications 370 may include an application (e.g., a health care application of a mobile medical appliance) designated according to an external electronic device. The applications 370 may include an application received from an external electronic device and/or may include a preloaded application or a third party application that may be downloaded from a server.

The names of the components of the program module 310 of the illustrated in FIG. 3 may change according to the type of OS.

At least a part of the programming module 310 may be implemented in software, firmware, hardware, or a combination of two or more thereof. At least some of the program module 310 may be implemented (e.g., executed) by a processor. At least some of the program module 310 may include a module, a program, a routine, a set of instructions, and/or a process for performing one or more functions.

Herein, the term "module" may mean a unit including one of hardware, software, and firmware or a combination of two or more of them. A "module" may be interchangeably used with, for example, the terms "unit", "logic", "logical block", "component", and "circuit". A "module" may be a minimum unit of an integrated component element or a part thereof. A "module" may be a minimum unit for performing one or more functions or a part thereof. A "module" may be mechanically or electronically implemented. For example, a "module" may include at least one of an application-specific IC (ASIC) chip, a field-programmable gate arrays (FPGA), and a programmable-logic device for performing operations which have been known or are to be developed hereinafter.

At least some of the devices (e.g., modules or functions thereof) or the method (e.g., operations) according to the present disclosure may be implemented by a command stored in a computer-readable storage medium in a programming module form. The instruction, when executed by a processor, may cause the one or more processors to execute the function corresponding to the instruction. The computer-readable recording media may be, e.g., the memory 130.

The computer readable recording medium may include a hard disk, a floppy disk, a magnetic medium (e.g., a magnetic tape), an optical storage medium (e.g., a compact disc-ROM (CD-ROM) or a DVD, a magnetic-optic medium, such as a floptical disc), an internal memory, etc. The instruction may include a code created by a compiler or a code executable by an interpreter. The module or programming module may further include at least one or more constitutional elements among the aforementioned constitutional elements, or may omit some of them, or may further include other constitutional elements. Operations performed by a module, programming module, or other constitutional elements may be executed in a sequential, parallel, repetitive, or heuristic manner. Alternatively, at least some of the operations may be executed in a different order or may be omitted, or other operations may be added.

A recording medium may include a computer-readable recording medium in which a program for causing a processor (e.g., the processor 120 or 210) to perform various methods described below is recorded.

The electronic device may include all devices that use one or more of various processors, such as an AP, a CP, a GPU, a CPU, etc. For example, the electronic device may include an information communication device, a multimedia device, a wearable device, an IoT device, or various other devices corresponding to these devices.

Hereinafter, operation methods and devices according to various embodiments of the present disclosure will be described with reference to accompanying drawings. However, since the present disclosure is not limited to the various embodiments of the following description, variations may be made to the embodiments that will be described below.

Hereinafter, various embodiments of the present disclosure will be described based on an approach using hardware. However, the present disclosure includes a technology that uses both hardware and software, and thus, the various embodiments of the present disclosure may not exclude realization based on software.

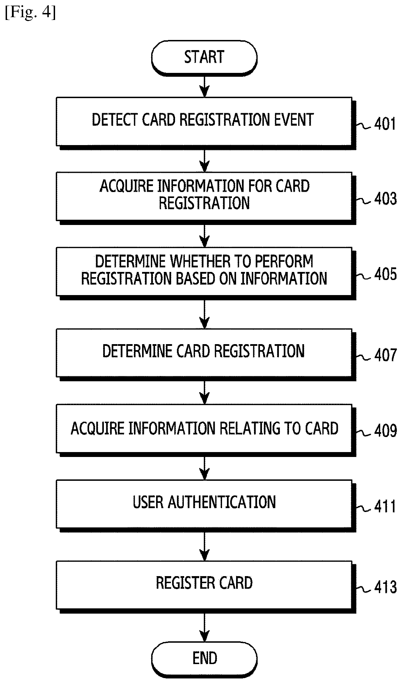

FIG. 4 is a flowchart illustrating a method of registering a card in an electronic device according to an embodiment of the present disclosure.

Referring to FIG. 4, in step 401, a processor of an electronic device may detect a card registration event. For example, the processor may determine card registration in response to detection of a trigger, which is set for card registration. For example, the trigger for card registration may include reception of a message related to card use or a message related to a payment request. When a user uses a card, such as a credit card, a debit card, or a point card, the processor may receive a related message (e.g., a payment detail message, etc.) from an associated card company server. The card company server may transmit a message including payment request information based on card use by the user to a registered electronic device of the user. The processor may determine whether the received message is related to card payment, point use, payment request, etc. (e.g., determine if a message is transmitted from the card company server), and when it is determined that the message is transmitted from the card company server, the processor 210 may determine that the message corresponds to a card registration event (or a card registration trigger) for registering an actual card as an electronic card.

In step 403, the processor acquires information for card registration. For example, the processor 210 may extract card-associated information (e.g., a card company name, a user name (i.e., the full name or a part of the name), payment, a card number (i.e., all or part of the number), etc.) associated with card registration based on the message received from the card company server. The processor may parse and analyze the message (e.g., characters in a message) to extract the card-associated information.

In step 405, the processor may determine whether the corresponding card has been registered as an electronic card based on the card-associated information. For example, the processor may determine whether the corresponding card is a pre-registered electronic card based on at least a part of the card-associated information. The processor may compare the card-associated information with card information of an electronic card pre-registered in the electronic device, and may determine based on the result of the comparison whether there is information corresponding to the card-associated information among pieces of the card information of the pre-registered electronic card. The processor may execute a payment application (e.g., execution in the background or execution in the foreground), transmit a registered card confirmation request for confirming whether the corresponding card has been registered as an electronic card to the card company server through the payment application, and determine, based on the response from the card company server, whether the card is a registered card.

In step 407, the processor determines to perform card registration, when the corresponding card has not been registered as an electronic card in the electronic device (or in a payment application of the electronic device). When determining to perform card registration, the processor may process the following operations automatically or manually. When it is determined that the card is not a registered electronic card, the processor may determine to register the card and automatically perform a card information acquisition procedure. When it is determined that the card is not a registered electronic card, the processor may determine to register the card, provide a menu (or a pop-up message) for user confirmation, and perform a card information acquisition procedure in response to the user confirmation using the menu.

In step 409, the processor acquires the card information related to the card. For example, the processor may request and receive the card information related to the corresponding card from the associated card company server, based on the card-associated information.

In step 411, the processor performs user authentication. The processor may perform user authentication based on biometric information of the user. The processor may recognize a fingerprint of the user by using a fingerprint recognition sensor, and may perform user authentication based on a recognized fingerprint. The processor may recognize an iris of the user by using an iris recognition sensor, and may perform user authentication based on a recognized iris.

The processor may use various user authentication schemes, such as a password, a personal identification number (PIN), or an authorized certificate, according to a setting scheme of the electronic device, in addition to the user authentication scheme based on biometric information (e.g., a fingerprint or an iris) of the user.

Alternatively, the user authentication may be performed after card registration determination in step 407, and the card information may be acquired according to the result of user authentication.

Alternatively, steps 407, 408, and 409 may be performed at the same time.

In step 413, the processor registers an electronic card based on the acquired card information. The processor may acquire information relating to the actual card, such as a card image, a card name, a card number, an expiration date, etc., configure information for an electronic card based on at least a part of the acquired information, generate the electronic card based on the configured information, and register the generated electronic card.

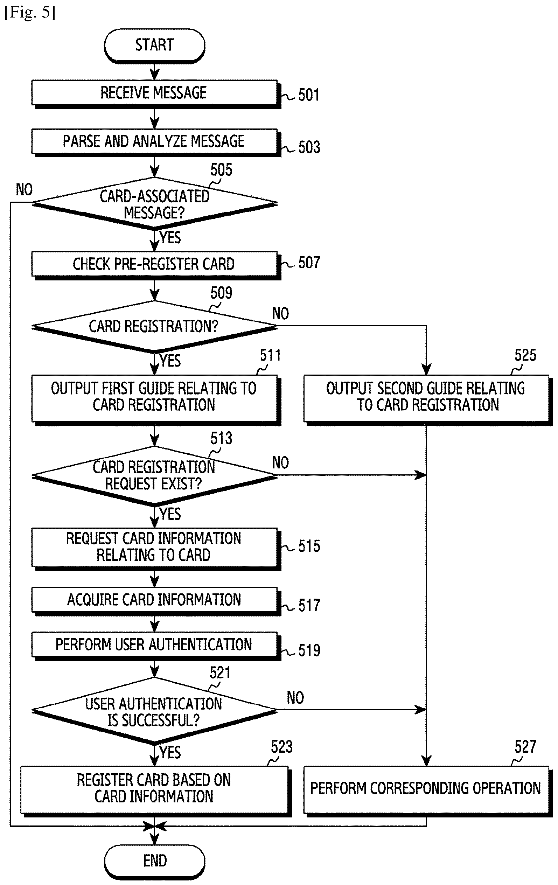

FIG. 5 is a flowchart illustrating a method of registering a card based on card-associated information in an electronic device according to an embodiment of the present disclosure.

Referring to FIG. 5, in step 501, a processor of an electronic device detects reception of a message. The message may be a text message, a messenger message, a push message, an instant message, an e-mail, etc.

In step 503, the processor parses and analyzes the received message. For example, when message reception is detected, the processor may parse and analyze the message (e.g., characters in the message).

In step 505, the processor determines whether the received message is a card-related message. For example, the processor may determine whether the received message is transmitted from the card company server. The processor may extract card-associated information (e.g., a card company name, a user name (the full name or a part of the name), payment, a card number (all or part of the number), etc.) associated with card registration based on the message received from the card company server. When the card-associated information is extracted from the message, the processor may determine that the corresponding message is transmitted from the card company server.

When a user uses a card, such as a credit card, a debit card, or a point card, the processor may receive a related message (e.g., a payment detail message, etc.) from an associated card company server. The card company server may transmit a message including payment request information based on card use by the user to a registered electronic device of the user. The processor may determine whether the received message is a message related to card payment (e.g., determine if a message is transmitted from the card company server), point use, payment request, etc., and when it is determined that the message is transmitted from the card company server, the processor may determine that the message corresponds to a card registration event (or a card registration trigger) for registering an actual card as an electronic card.

When it is determined that the received message is not a card-related message in step 505, the processor performs a general operation (e.g., message display) without a card registration procedure, or may perform a related function corresponding to a user input.

However, when it is determined that the received message is a card-related message in step 505, the processor checks a card pre-registered in the electronic device in step 507. The processor may compare the card-associated information with card information of an electronic card pre-registered in the electronic device.

In step 509, the processor determines whether or not to register the card. For example, the processor may determine whether or not to register the corresponding card as an electronic card based on the card-associated information, or the processor may determine whether the corresponding card is a pre-registered electronic card based on at least a part of the card-associated information. The processor may compare the card-associated information with card information of an electronic card pre-registered in the electronic device, and may determine based on the result of the comparison whether there exists information corresponding to the card-associated information among pieces of card information of the pre-registered electronic card.

The processor may determine whether or not to register the card depending on whether the card related to the card-associated information is a pre-registered electronic card. The processor may transmit a registered card confirmation request for confirming whether the corresponding card has been registered as an electronic card to the card company server through the payment application, and may determine based on the response from the card company server whether the card is a registered card.

When it is determined not to register the card in step 509, e.g., when the card corresponding to the card-associated information is a pre-registered electronic card, the processor outputs a second guide associated with card registration in step 525. The processor may output a guide for indicating that the card corresponding to the message is registered as an electronic card. The guide may include at least one of an audio (e.g., voice)-based guide and a video (e.g., a pop-up or a message)-based guide. When the card according to the card-associated information is a pre-registered electronic card, step 527 may be directly performed in lieu of first performing step 525.

In step 527, the processor perform a corresponding operation. For example, the processor may perform an operation, such as switching a screen (e.g., displaying a screen before a message screen) in response to user input, turning off the display 260, etc.

When it is determined to register the card in step 509, e.g., when the card corresponding to the card-associated information is not a pre-registered electronic card, the processor outputs a first guide associated with card registration in step 511. The processor may output a guide for checking whether or not to register the card corresponding to the message, as an electronic card. The guide may include at least one of an audio (e.g., voice)-based guide and a video (e.g., a pop-up or a message)-based guide. When card registration is automatically performed according to the setting of the electronic device, step 511 may be omitted. When step 511 is omitted, step 515 may be directly performed without performing step 513 which will be described below.

In step 513, the processor determines, based on the first guide, whether there is a card registration request from the user. For example, the user may determine, based on a result of the determination, whether or not to register the card related to the message as an electronic card, and may select or cancel card registration based on a result of the determination. The processor may determine whether to perform a procedure for card registration, based on a user input according to card registration or cancellation of card registration.

When cancellation of card registration is confirmed ("No" in step 513), e.g., when selection of the cancellation of card registration by the user is detected based on the first guide, the processor performs a corresponding operation in step 527. For example, the processor may perform a procedure, such as cancelling output of the first guide (e.g., eliminating display of the first guide), switching the screen according to the user input, performing another function, turning off the display, etc.

When a request for card registration is confirmed ("Yes" in step 513), e.g., when selection of card registration approval by the user is detected based on the first guide, the processor requests card information relating to the card from the card company server in step 515. The processor may determine, based on at least a part of the card-associated information, an associated card company, and may request card information relating to the card of the user of the electronic device from the card company server corresponding to the associated card company. The processor may determine the card company name based on the card-associated information or may determine the card company name based on the card name. The processor may determine the card company name based on a counterpart's phone number from which the message was transmitted. The card company may be determined based on card-company-related-information (e.g., address information, link information, etc.) included in the message.

When the card information is requested, the processor may transmit, to the card company server, a request message including identification information for identifying the user (e.g., device information of the electronic device (e.g., an international mobile equipment identity (IMEI), an IMSI, SIM information, a user name, etc.), information on the corresponding card for which card information is requested (e.g., use detail or information related to a payment requested-card), etc.

In step 517, the processor acquires the card information. For example, the card company server may transmit, to the electronic device, a response message including the card information relating to the corresponding card in response to the request from the electronic device, and the electronic device may receive the response message including the card information from the card company server. In response to reception of the response message from the card company server, the processor may acquire card information from the response message.

In step 519, the processor performs user authentication. The processor may perform the user authentication based on biometric information (e.g., fingerprint information and iris information) of the user. The processor may use various user authentication schemes, such as a password, a PIN, or an authorized certificate, according to a setting scheme of the electronic device, in addition to the user authentication scheme based on biometric information (e.g., a fingerprint or an iris) of the user.

Alternatively, the user authentication may be performed after card registration is requested by the user in step 513. Thereafter, the card information may be acquired according to the result of user authentication, and step 519 may be omitted. Alternatively, the user authentication operation may be performed both after a card registration request operation of the step 519 and after a card information acquisition operation of the step 517.

In step 521, the processor determines whether the user authentication was successful. The processor may compare the biometric information acquired for user authentication with pre-registered user biometric information, and determine whether the user authentication is successful according to whether or not the biometric information matches.

When the user authentication fails ("No" in step 521), the processor performs a corresponding operation in step 527. The processor may output a pop-up message for notifying the user that the user authentication has failed, and may re-perform user authentication according to selection of the user or terminate the card registration procedure. When the user authentication fails a preconfigured number of times, the processor may automatically terminate the card registration procedure.

When the user authentication is successful ("Yes" in step 521), the processor registers the card based on the card information in step 523. The processor may acquire information relating to the actual card, such as a card image, a card name, a card number, an expiration date, etc., based on the card information, configure information for an electronic card based on at least a part of the acquired information, generate an electronic card based on the configured information, and register the generated electronic card.

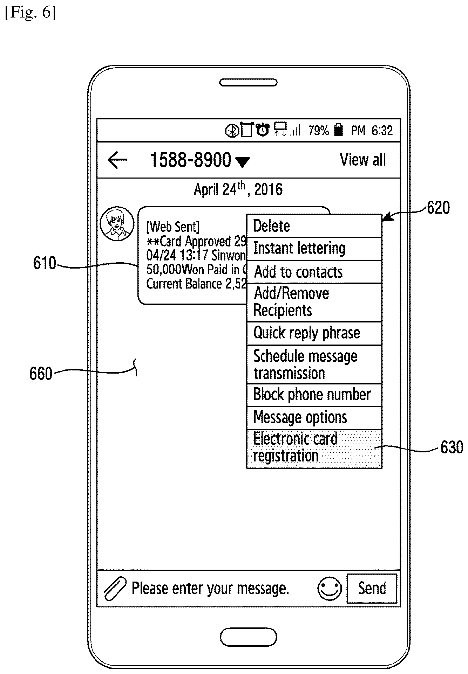

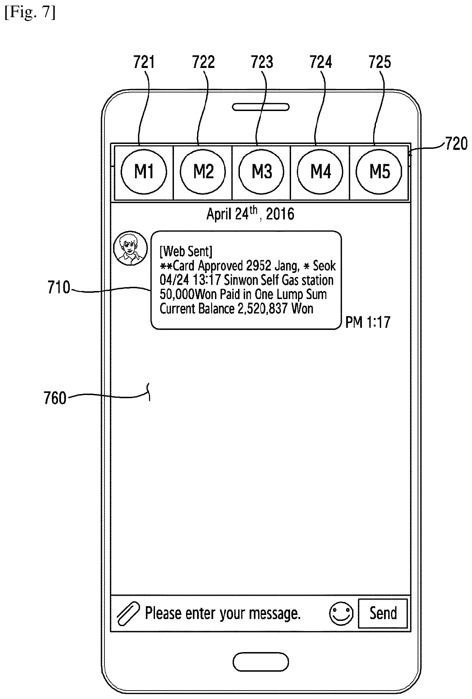

FIGs. 6 and 7 illustrate examples of screen images of a card-related message in an electronic device according to an embodiment of the present disclosure.

Specifically, FIG. 6 performing card registration based on a text message related to a card.

Referring to FIG. 6, the electronic device displays a text message 610 on a screen of a display 660. When the text message 610 relates to a card, the electronic device may automatically or manually perform card registration.

The electronic device may confirm that the text message 610 is a card-related message, and may automatically perform a card registration procedure when the card is not registered as an electronic card in the electronic device (or a payment application of the electronic device).

The electronic device displays a list 620 of various menus, which can be performed with respect to the text message 610, in response to a user input (e.g., option (e.g., more selection) selection, a long press on the text message 610, etc.). The list 620 of various menus may include a card registration menu 630 for registration (or addition) in the electronic device. A user may register, as an electronic card, the card relating to the text message 610 through selection of the card registration menu 630.

FIG. 7 illustrates a messenger message (or an instant message) related to a card.

Referring to FIG. 7, the electronic device may display a messenger message 710 received through a messenger service, on a screen of a display 760. The electronic device may include a messenger selection area 720 in which various messenger services (e.g., a first messenger service 721, a second messenger service 722, a third messenger service 723, a fourth messenger service 724, a fifth messenger service 725, etc.) may be selected in a toggle scheme. The electronic device may provide, in the messenger selection area 720, a messenger service corresponding to a messenger service provider having a service affiliation to provide a card-related message of a card company. The messenger service in the messenger selection area 720 may include a messenger service agreed with the card company in order to provide the card-related message, independently or separately from a general messenger service.

Different messenger services may be associated with respective different card companies, or one or more messenger services may be associated with each card company. A first card company may be associated with a first messenger service 721, a second card company may be associated with a second messenger service 722, etc. In this case, a card-related message of the first card company may be provided by the first messenger service 721, and a card-related message of the second card company may be provided by the second messenger service 722.

Alternatively, the first card company may be associated with the first messenger service 721, and the second card company may be associated with the second messenger service 722 and the third messenger service 723. In this case, the card-related message of the first card company may be provided by the first messenger service 721, and the card-related message of the second card company may be provided by the second messenger service 722 and the third messenger service 723.

A user may select a specific messenger service in the messenger selection area 720, and checks the messenger message 710 received through the selected messenger service. When the messenger message 710 is a card-related message, the electronic device may automatically or manually perform card registration. The operation of registering the card based on the messenger message may be performed in a manner the same as or similar to that described in the description made with reference to FIG. 6. A card registration menu display or a card registration request link in the message may be included.

Through cooperation between the card company and the messenger service provider, the card-related message may be provided by the associated messenger service, and the user may easily perform card registration even through the messenger service. When card registration is provided through such cooperation between the card company and the messenger service provider, a message may be directly selected without going through a message-parsing process, or by a pre-appointment between the card company and the messenger service provider, or card registration may be induced based on the messenger message 710 via a pop-up message.

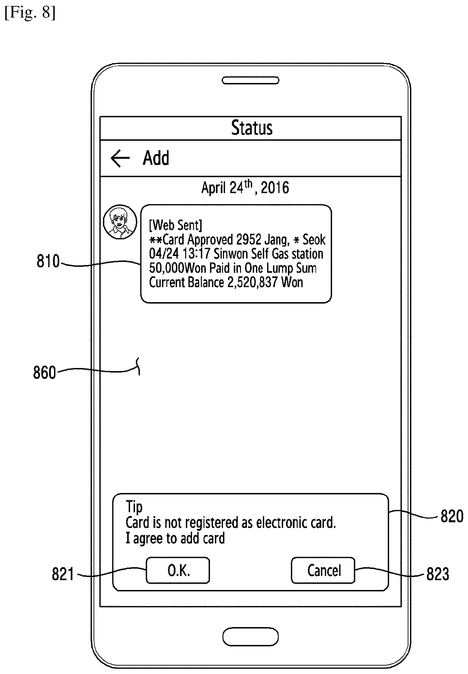

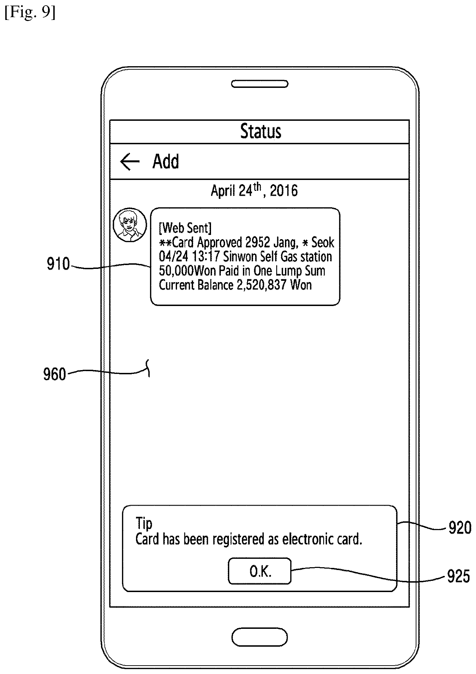

FIGs. 8 and 9 illustrate a guide associated with card registration in an electronic device according to an embodiment of the present disclosure.

Referring to FIG. 8, a first guide 820 may be provided when a corresponding card according to a message 810 (e.g., card-associated information) is not registered as an electronic card in the electronic device (or a payment application of the electronic device).

The electronic device displays the message 810 on a screen of a display 860. The electronic device may confirm that the message 810 is a card-related message, and when it is determined that the corresponding card is not registered as an electronic card, e.g., when electronic device determines to perform card registration, the electronic device may output the first guide 820 in an area (e.g., in an upper end, a center, a lower end, etc.) of the display 860 in an overlay scheme, a pop-up scheme, etc.

The first guide 820 may include guide information for inducing registration as an electronic card (e.g., "the card is not registered as an electronic card. I agree to add the card."), a selection button (e.g., a first button 821) for user confirmation to register the card (e.g., "Confirm"), and a cancelation button (e.g., a second button 823) for the user canceling registration of the card. A user may confirm that it is possible to register a card relating to the message 810, as an electronic card, based on the first guide 820, and may select card registration or cancel card registration. The electronic device may determine whether or not to perform card registration based on the user selection (e.g., selecting the first button 821 or selecting the second button 823). When the corresponding card is not registered as an electronic card, and when card registration is set to be automatically performed, the electronic device may omit the first guide 820, and instead, may automatically perform the card registration procedure in the background. The electronic device may output a result page (e.g., a screen for a newly registered electronic card) indicating the result of the card registration procedure.

FIG. 9 illustrates an example of providing a second guide relating to card registration. Specifically, a second guide 920 may be provided when a card corresponding to a message (e.g., card-associated information) has already been registered as an electronic card in the electronic device (or a payment application of the electronic device).

Referring to FIG. 9, the electronic device may display a message 910 on a screen of a display 960. The electronic device may confirm that the message 910 is a card-related message, and when it is determined that the corresponding card has already been registered as an electronic card in the electronic device, the electronic device may output the second guide 920 in an area (e.g., in an upper end, a center, a lower end, etc.) of the display 960 in an overlay scheme, a pop-up scheme, etc.

The second guide 920 may include guide information (e.g., "the card has been registered as an electronic card") indicating that the corresponding card has been already registered as an electronic card, and a confirmation button 925 for user confirmation. The second guide 920 may omit the confirmation button 925, and the second guide 920 may be automatically removed from the screen after a predetermined amount of time has elapsed.

When the corresponding card has already been registered as an electronic card, the electronic device omit the second guide 920, and may maintain the message 910 being displayed.

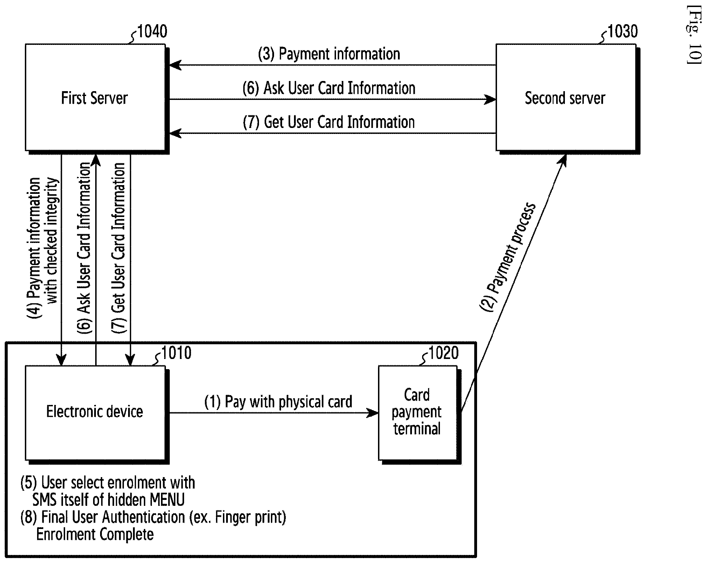

FIG. 10 illustrates a procedure of registering a card in a system according to an embodiment of the present disclosure.

Referring to FIG. 10, the system includes an electronic device 1010, a card payment terminal 1020 (e.g., a card terminal or a POS terminal), a first server 1040, and a second server 1030.

In step (1), a user performs payment using a physical card (e.g., an actual card) at an online store or an offline store, via the card payment terminal 1020 (or a server which functions as a card payment terminal online (or Web) by using the electronic device 1010).

In step (2), the card payment terminal 1020 transmits a payment processor request for payment approval, which includes information on payment made by the physical card of the user, to the second server 1030. The card payment terminal 1020 may acquire the user's payment information based on the physical card, and transmit the payment information to a corresponding card company server. The second server 1030 may include the card company server, which provides various messages associated with card use and card payment approval. The payment information may include information on the amount paid using the actual card, card information (e.g., a card identification number, an expiration period, etc.) of the card used for payment, etc.

In step (3), the second server 1030 processes payment approval, in response to payment information and a payment process request from the card payment terminal 1020, and transmits a card-related message including the payment information to the first server 1040. The second server 1030 identifies the card for which payment approval is requested, the card user, information on the terminal registered by the user (e.g., a phone number of the electronic device 1010), etc., based on the payment information. The card-related message may include terminal information of the electronic device 1010 in addition to the payment information.

In step (4), the first server 1040 checks the integrity of the payment information received from the second server 1030, and transmits the card-related message including the payment information to the corresponding electronic device 1010 based on the result of checking. The first server 1040 may include a payment server, a provider server, or a communication company server, which stores and process the card payment information as an intermediary, and provides a communication service of the electronic device 1010.

In step (5), the electronic device 1010 receives the card-related message and provides the received card-related message to the user. The electronic device 1010 may determine card registration automatically or manually through user selection with respect to the card-related message. When it is confirmed that the received message is the card-related message transmitted by the second server 1030 (e.g., a card company server), the electronic device 1010 may determine to register the card. The electronic device 1010 may receive the card-related message, display details (e.g., payment information) of the message, and determine to register the card in response to the user's selection of a card registration menu.

In step (6), in response to determining to register the card, the electronic device 1010 transmits a request message for requesting transmission of card information relating to the card, to the second server 1030, through the first server 1040, in order to acquire card information for card registration. For example, the electronic device 1010 may transmit the request message for requesting transmission of the card information to the first server 1040, and the first server 1040 may receive the request message of the electronic device 1010 and forward the request message to the second server 1030.

In step (7), the second server 1030 acquires card information corresponding to a card requested from a database of the second server 1030, and transmits the acquired card information to the electronic device 1010 through the first server 1040. For example, the second server 1030 may transmit a response message including corresponding card information to the first server 1040, in response to reception of the request message for requesting transmission of the card information, and the first server 1040 may receive the response message of the second server 1030 and forward the response message to the electronic device 1010.

In step (8), when the card information is acquired, the electronic device 1010 performs user authentication based on a set authentication scheme (e.g., biometric information (e.g., an iris, a fingerprint, etc.) recognition, PIN recognition, etc.), and completes card registration based on the result of user authentication.

A transmission/reception operation corresponding to steps (6) and (7) may be performed based on various secure transmission techniques. For example, the card information may be securely transmitted or received based on various encryption schemes that may prevent hacking, eavesdropping, illegal use, etc.

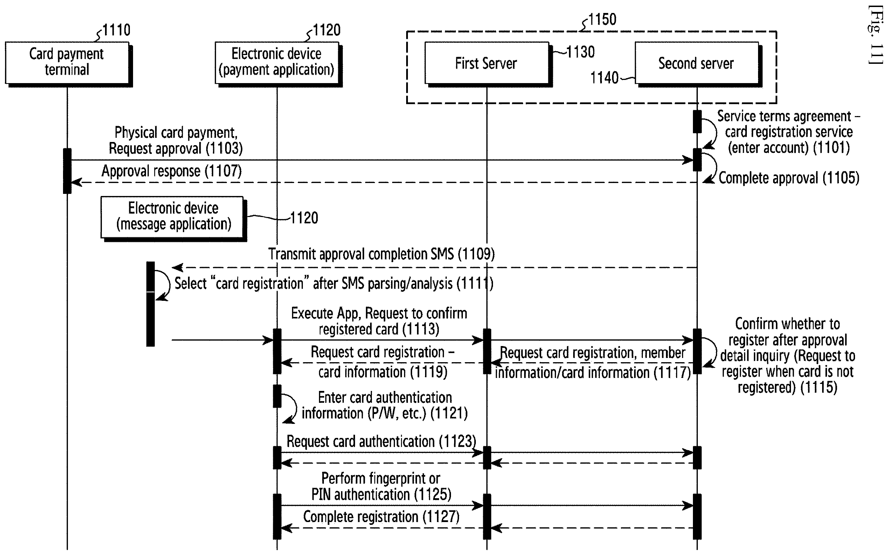

FIG. 11 illustrates a card registration procedure in a system according to an embodiment of the present disclosure.

Referring to FIG. 11, an existing user performs card registration based on a text message, using a card payment terminal 1110, an electronic device 1120, a first server 1130 (e.g., a payment server), and a second server 1140 (e.g., a card company server, a token server, etc.).

The electronic device 1120 may include a smartphone capable of executing a payment application (e.g., Samsung Pay^{™}), a wearable device, a tablet PC, etc. The electronic device 1120 may have information on a card company and/or financial company, which have issued a physical card and an electronic card (or an application card, etc.).

The first server 1130 may manage an electronic payment service and a card registration service, which are performed by a payment application of the electronic device 1120. The first server 1130 may directly process or transmit, to the second server 1140, various information associated with card registration, which is received from the electronic device 1120. The first server 1130 may directly process or transmit, to the electronic device 1120, various information associated with card registration, which is received from the second server 1140. The first server 1130 may mediate the exchange of card-associated information and card information between the electronic device 1120 and the second server 1140. The first server 1130 may be wirelessly connected with the electronic device 1120. The first server 1130 may be connected with the second server 1140 in a wired or wireless manner.

The second server 1140 may issue a card to a user and manage the card. The second server 1140 may be connected with a finance server or a purchase server in a wired or wireless manner.

The first server 1130 and the second 1140 may be functionally connected. The first server 1130 and the second server 1140 may be implemented as one integrated server 1150 (e.g., a form in which a first server 1130 and a second server 1140 are installed in one housing) or may be implemented separately (e.g., a form in which the first server 1130 and the second server 1140 are installed separately in separate housings).

At least one of the first server 1130 and the second server 1140 may pre-register or manage card information (e.g., a card name, a card number, an expiration period, used card information, etc.) corresponding to one or more cards used by the user in a service account or a unique identifier of the electronic device 1120.

In various embodiments, a system for card registration may include the electronic device 1120, the first server 1130 (e.g., a payment server), and the second server 1140 (e.g., a card company server). The system for card registration may further include a card payment terminal 1110 (e.g., a card terminal, a POS terminal, etc.) and a token server (not illustrated). In addition, the system may further include a finance server (not illustrated), a payment network (not illustrated), a purchase server (not illustrated), or etc.

In step 1101, the second server 1140 registers a service term agreement and a service account (e.g., a Samsung account) for a card registration service of the user, i.e., in advance of a purchase.

In step 1103, the user performs card payment using an actual card, and the card payment terminal 1110 transmits an approval request for use of the corresponding card to the second server 1140, in response to the card payment.

In step 1105, the second server 1140 receives the request for approval of the card payment and completes approval through a predetermined authentication procedure for the approval request.

In step 1107, the second server 1140 transmits, to the card payment terminal 1110, an approval response corresponding to the request for approval of the card payment terminal 1110.

In step 1109, the second server 1140 transmits, sequentially or in parallel with step 1107, an approval completion message (e.g., a card-related message) for card use.

In step 1111, the electronic device 1120 receives a message through a message application, parses and analyzes the content of the received message, and selects card registration (or determines to register the card). For example, the electronic device 1120 may determine card registration corresponding to confirmation that the message is a card-related message.

In step 1113, the electronic device 1120 executes a payment application (e.g., execution in the background or execution in the foreground) in response to determining to register the card, and transmits a registered card confirmation request to the second server 1140 through the first server 1130, in order to check whether the corresponding card has been registered as an electronic card, via the payment application. In The registered card confirmation request may include a card information request corresponding to the card.

In step 1115, the second server 1140 determines whether a confirmation-requested card has been registered as an electronic card, in response to the registered card confirmation request. The second server 1140 may determine to make a registration request, when it is determined that the confirmation-requested card is not already registered. The second server 1140 examine approval details in order to determine if the card approved for payment is a previously registered card or an unregistered card.

In step 1117, the second server 1140 transmits, to the first server 1130, a card registration request and related information (e.g., user (member) information, card information, etc.) in response to the determination that the card is an unregistered card.

In step 1119, the first server 1130 transmits, to the electronic device 1120, a card registration request and card information for card registration, in response to reception of the card registration request from the second server 1140. In step 1119, the first server 1130 may transmit only the card registration request to the electronic device 1120, and may then provide the card information to the electronic device 1120 in response to the card information request from the electronic device 1120. For example, the first server 1130 may store, manage, and process the card information as an intermediary.

In step 1121, the electronic device 1120 requests a user (e.g., displays an associated user interface) to input card authentication information (e.g., biometric information, a password, a PIN, etc.) through the payment application, and acquires the card authentication information from the user.

In step 1123, the electronic device 1120 performs an operation associated with card authentication with the second server 1140 based on the card authentication information input by the user by the user. The electronic device 1120 may transmit a card authentication request to the second server 1140 through the first server 1130 based on the card authentication information, and the second server 1140 may transmit a card authentication response to the electronic device 1120 through the first server 1130 based on the card authentication information.

Alternatively, the electronic device 1120 may directly perform step 1125 without performing steps 1121 and 1123, and may then perform the remaining operations.

The electronic device 1120 may determine whether the user is an existing subscriber or a new subscriber based on a card authentication procedure corresponding to steps 1121 and 1123.

When the user is an existing subscriber, approval associated with card registration may be performed without performing an additional authentication procedure (e.g., a user authentication procedure based on a message) for user identification.

In step 1125, the electronic device 1120 performs user authentication. The electronic device 1120 may perform user authentication based on various user authentication schemes, such as user biometric information (e.g., a fingerprint or an iris), a PIN, or an authorized certificate. The electronic device 1120 may transmit authentication information (e.g., biometric information, a PIN, or an authorized certificate) acquired for the user authentication to the second server 1140 through the first server 1130.

In step 1127, the electronic device 1120 completes registration of the card related to the message as an electronic card and manages the same, in response to a registration completion response from the second server 1140.

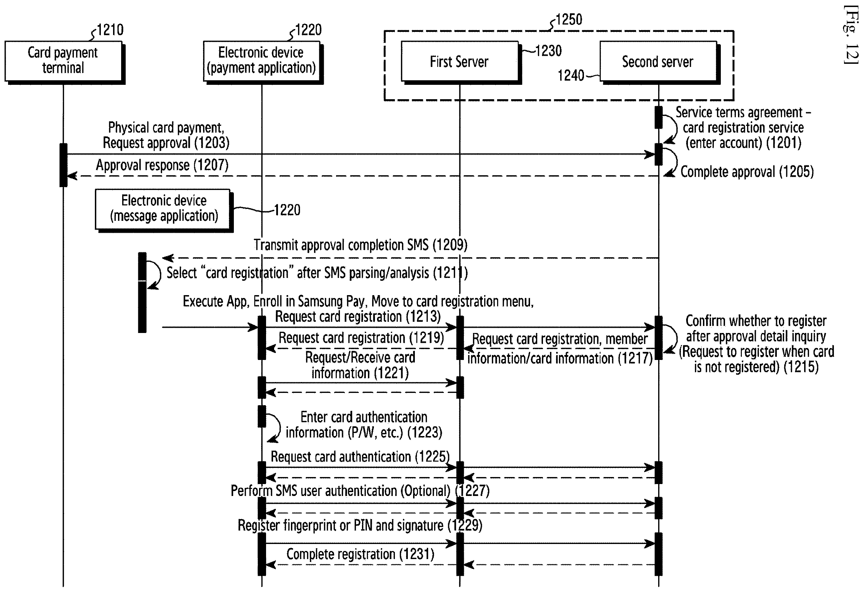

FIG. 12 illustrates a card registration procedure in a system according to an embodiment of the present disclosure.

Specifically, FIG. 12 illustrates an example of performing card registration for a new user based on a text message, using a card payment terminal 1210, an electronic device 1220, a first server 1230 (e.g., a payment server), a second server 1240 (e.g., a card company server).

In FIG. 12, the electronic device 1220, the first server 1230, the second server 1240, and the card payment terminal 1210 correspond to the electronic device 1120, the first server 1130, the second server 1140, and the card payment terminal 1110 of FIG. 11, and a detailed description thereof will be omitted.

Referring to FIG. 12, steps 1201, 1203, 1205, 1207, 1209, 1211, 1213, 1215, and 1217 correspond to steps 1101, 1103, 1105, 1107, 1109, 1111, 1113, 1115, and 1117, respectively, of FIG. 11, and a detailed description thereof will be omitted.

In step 1219, the first server 1230 transmits a card registration request to the electronic device 1220, in response to the card registration request from the second server 1240. The first server 1230 may store and manage card information received from the second server 1240.

In step 1221, the electronic device 1220 requests the card information from the first server 1230, through a payment application, in response to the card registration request, and receives the card information from the first server 1230, in response to the request for the card information. For example, the electronic device 1220 may transmit a request message for requesting card information to the first server 1230, and the first server 1230 may transmit a response message including card information, which is previously received from the second server 1240 and stored, to the electronic device 1220 in response to reception of the request message.

In step 1223, the electronic device 1220 requests a user (e.g., displays an associated user interface) to input card authentication information (e.g., biometric information, a password, a PIN, etc.) through the payment application, and acquires the card authentication information from the user.

In step 1225, the electronic device 1220 performs an operation associated with card authentication with the second server 1240 based on the card authentication information input by the user by the user. The electronic device 1220 may transmit a card authentication request to the second server 1240 through the first server 1230 based on the card authentication information, and the second server 1240 may transmit a card authentication response to the electronic device 1220, through the first server 1230, based on the card authentication information. The electronic device 1220 may directly perform step 1227, without performing steps 1223 and 1225, and may then perform the remaining operations.

The electronic device 1220 may determine whether the user is an existing subscriber or a new subscriber based on a card authentication procedure corresponding to steps 1223 and 1225. When the user is a new subscriber, an additional authentication procedure (e.g., a user authentication procedure based on a message) for user identification may be optionally performed in order to improve security.

In step 1227, the electronic device 1220 performs a procedure for message-based (e.g., an SMS message) user authentication with the first server 1230 and the second server 1240, in response to confirmation that the user is a new subscriber. A message-based user authentication procedure is a known technology and a detailed description thereof will be omitted.

In step 1229, the electronic device 1220 performs user authentication. The electronic device 1220 may perform user authentication based on various user authentication schemes, such as user biometric information, a PIN, or an authorized certificate. The electronic device 1220 may transmit authentication information (e.g., biometric information, a PIN, or an authorized certificate) acquired for the user authentication, to the second server 1240, through the first server 1230.

In step 1231, the electronic device 1220 may complete registration of the card related to the message as an electronic card and manage the same, in response to a registration completion response from the second server 1240.

As described with reference to FIGs. 11 and12, the second server 1140 or 1240 (e.g., a card company server) may determine whether a card corresponding to a message has been pre-registered as an electronic card or is an unregistered card. When a user is an existing subscriber, e.g., when at least one card among cards used by the user has been pre-registered in a card company server, card registration may be possible simply through one-time user authentication using biometric information or a PIN, as illustrated in FIG. 11. However, when the user is a new subscriber, e.g., when at least one card among the cards used by the user has not been pre-registered in a card company server, the user authentication procedure may be further performed using a text message scheme, etc., as illustrated in FIG. 12, and then the remaining card registration procedures may proceed. The user authentication procedure may be performed based on a call authentication scheme in addition to the text message scheme.

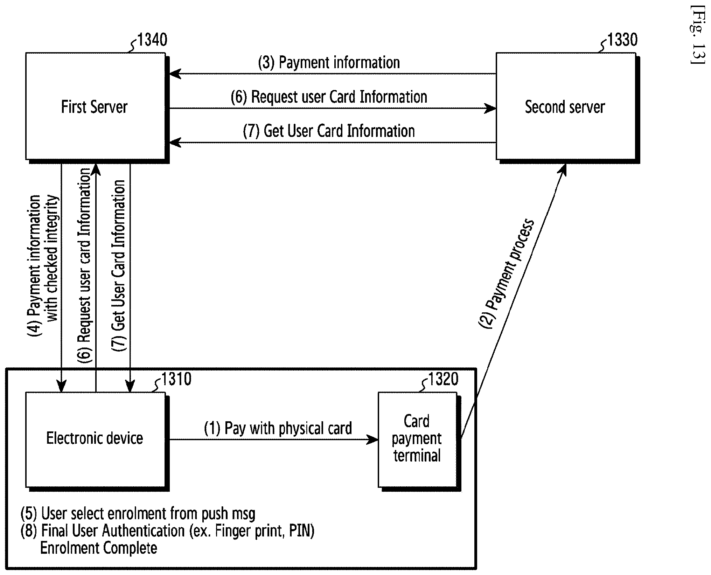

FIG. 13 illustrates a procedure for registering a card in a system according to an embodiment of the present disclosure.

Referring to FIG. 13, the system includes an electronic device 1310, a card payment terminal 1320 (e.g., a card terminal or a POS terminal), a first server 1340, and a second server 1330.

In step (1), a user performs a payment using a physical card (e.g., an actual card) at an online store or an offline store by using the card payment terminal 1320 (or a server which functions as a card payment terminal online (or Web) by using the electronic device 1310).

In step (2), the card payment terminal 1320 transmits a payment processor request for payment approval, which includes information on payment made by the physical card of the user, to the second server 1330. The card payment terminal 1320 may acquire the user's payment information based on the physical card, and transmit the payment information to a corresponding card company server. The second server 1330 may include the card company server, which provides various messages associated with card use and card payment approval. The payment information may include information on the amount paid using the actual card, card information (e.g., a card identification number, an expiration period, etc.) of a card used for payment, etc.

In step (3), the second server 1330 processes payment approval in response to payment information and a payment process request from the card payment terminal 1320, and transmits a card-related message including the payment information to the first server 1340. The second server 1330 may determine the card for which payment approval is requested, the card user, information on a terminal registered by the user (e.g., a phone number of the electronic device 1310), etc., based on the payment information. The card-related message may include terminal information of the electronic device 1310 in addition to the payment information. The second server 1330 may transmit a card registration request for the corresponding card together with payment information to the first server 1340.

In step (4), the first server 1340 checks the integrity of the payment information received from the second server 1330, and transmits the card-related message including the payment information to the corresponding electronic device 1310 based on the result of checking. The first server 1340 may include a payment server, a provider server, or a communication company server, which stores and process the card payment information as an intermediary, and provides a communication service of the electronic device 1310. The first server 1340 may transmit a card-related message including payment information to the electronic device 1310 in a push message form for requesting card registration of the corresponding card, in response to reception of the payment information and the card registration request from the second server 1330.

In step (5), the electronic device 1310 may receive the push message (e.g., the card-related message) and provide the received card-related message to the user. The electronic device 1310 may determine card registration automatically or manually by user selection with respect to the push message. When it is confirmed that the received message is the push message, the electronic device 1310 may determine to register the card. The electronic device 1310 may receive the push message, display details of the message (e.g., payment information), and determine to register the card in response to the user's selection of a card registration menu.

In step (6), in response to determining to register the card, the electronic device 1310 may transmit a request message for requesting transmission of card information relating to the card, to the second server 1330, through the first server 1340, in order to acquire card information necessary for card registration. For example, the electronic device 1310 may transmit the request message for requesting transmission of the card information to the first server 1340, and the first server 1340 may receive the request message of the electronic device 1310 and forward the request message to the second server 1330.

In step (7), the second server 1330 acquires card information corresponding to a card requested from a database of the second server 1330, and transmits the acquired card information to the electronic device 1310 through the first server 1340. For example, the second server 1330 may transmit a response message including corresponding card information to the first server 1340, in response to reception of the request message for requesting transmission of the card information, and the first server 1340 may receive the response message of the second server 1330 and forward the response message to the electronic device 1310.

In step (8), when the card information is acquired, the electronic device 1310 performs user authentication based on a set authentication scheme (e.g., biometric information recognition, PIN recognition, etc.), and completes card registration based on the result of user authentication.

A transmission/reception operation corresponding to steps (6) and (7) may be performed based on various secure transmission techniques. For example, the card information may be securely transmitted or received based on various encryption schemes that may prevent hacking, eavesdropping, or illegal use.

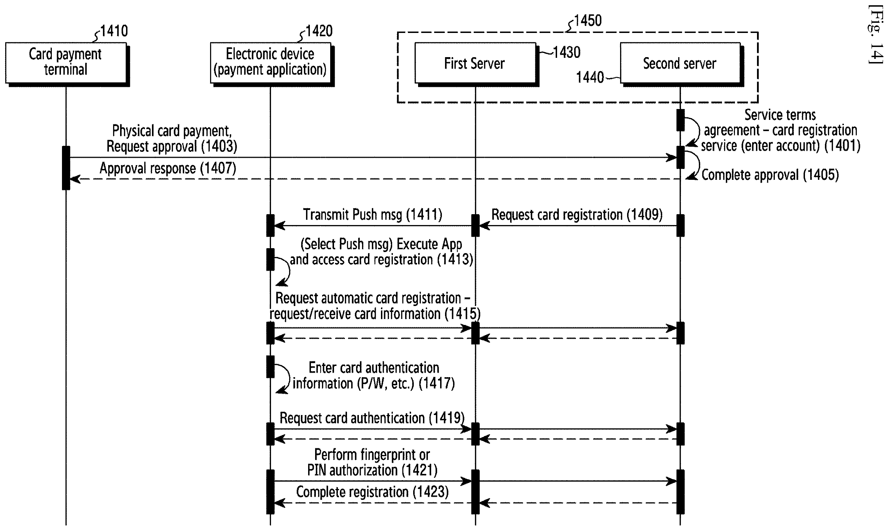

FIG. 14 illustrates a card registration procedure in a system according to an embodiment of the present disclosure.

Specifically, FIG. 14 illustrates an example of performing card registration for an existing user based on a push message in an electronic device 1420, a first server 1430 (e.g., a payment server), and a second server 1440 (e.g., a card company server, a token server, etc.).

The electronic device 1420 may include a smartphone capable of executing a payment application (e.g., Samsung Pay^{™}), a wearable device, a tablet PC, etc. The electronic device 1420 may have information on the card company and/or financial company, that issued a physical card and an electronic card (or an application card).

The first server 1430 may manage an electronic payment service and a card registration service, which are performed by a payment application of the electronic device 1420. The first server 1430 may directly process or transmit, to the second server 1440, various information associated with card registration, which is received from the electronic device 1420. The first server 1430 may directly process or transmit, to the electronic device 1420, various information associated with card registration, which is received from the second server 1440. The first server 1430 may mediate the exchange of card-associated information and card information between the electronic device 1420 and the second server 1440. The first server 1430 may be wirelessly connected with the electronic device 1420. The first server 1430 may be connected with the second server 1440 in a wired or wireless manner.

The second server 1440 may issue a card to a user and manage the card. The second server 1440 may be connected with a finance server or a purchase server in a wired or wireless manner.

The first server 1430 and the second server 1440 may be functionally connected. The first server 1430 and the second server 1440 may be implemented as one integrated server 1450 (e.g., a form in which a first server 1430 and a second server 1440 are installed in one housing) or may be implemented separately (e.g., a form in which the first server 1430 and the second server 1440 are installed separately in separate housings).

At least one of the first server 1430 and the second server 1440 may pre-register or manage card information (e.g., a card name, a card number, an expiration period, used card information, etc.) corresponding to one or more cards used by the user in a service account or a unique identifier of the electronic device 1420.

Referring to FIG. 14, the system for card registration includes the electronic device 1420, the first server 1430 (e.g., a payment server), the second server 1440 (e.g., a card company server), a card payment terminal 1410 (e.g., a card terminal, a POS terminal, etc.), and a token server. In addition, a finance server, a payment network, a purchase server, etc., may be included.

In step 1401, the second server 1440 registers a service term agreement and a service account (e.g., a Samsung account) for a card registration service of the user, in advance of using the card.

In step 1403, the user performs a card payment using an actual card, and the card payment terminal 1410 transmits an approval request for use of the corresponding card to the second server 1440, in response to the card payment.

In step 1405, the second server 1440 receives the request for approval of the card payment and completes approval through a predetermined authentication procedure for the approval request.

In step 1407, the second server 1440 transmits, to the card payment terminal 1410, an approval response corresponding to the approval request from the card payment terminal 1410.

In step 1409, the second server 1440 transmits, sequentially or in parallel with operation 1407, a card registration request for the corresponding card that was approved for card use. The second server 1440 may transmit, to the first server 1430, a card registration request and an approval completion message (e.g., a card-related message) for card use.

In step 1411, the first server 1430 receives the card registration request from the second server 1440, and transmits, to the electronic device 1420, a push message for requesting card registration in response thereto. For example, the first server 1430 may determine card registration by the electronic device 1420 in response to reception of the card registration request from the second server 1440, and may transmit, to the electronic device 1420, the push message which enables the card registration procedure to be performed by the electronic device 1420.

In step 1413, the electronic device 1420 executes the payment application (e.g., execution in the background or execution in the foreground) in response to reception of the push message for card registration from the first server 1430, and determines a service (or function) entry for performing card registration through the payment application.

In step 1415, via the payment application, the electronic device 1420 requests, from the second server 1440, card information corresponding to the card in order to register the card, and receives the card information corresponding thereto from the second server 1440. For example, the electronic device 1440 may transmit a request message for requesting transmission of the card information associated with a registration-requested card to the second server 1440 through the first server 1430. The second server 1440 may acquire card information corresponding to the card, and may transmit a response message including the acquired card information to the electronic device 1420 through the first server 1430.

In step 1417, the electronic device 1420 requests a user (e.g., displays an associated user interface) to input card authentication information (e.g., biometric information, a password, a PIN, etc.) through the payment application, and may acquire the card authentication information from the user.

In step 1419, the electronic device 1420 performs an operation associated with card authentication with the second server 1440 based on the card authentication information input by the user by the user. The electronic device 1420 may transmit a card authentication request to the second server 1440, through the first server 1430, based on the card authentication information, and the second server 1440 may transmit a card authentication response to the electronic device 1420, through the first server 1430, based on the card authentication information. The electronic device 1420 may directly perform step 1421 without performing steps 1417 and 1419, and may then perform the remaining operations. The electronic device 1420 may determine whether the user is an existing subscriber or a new subscriber based on a card authentication procedure corresponding to steps 1417 and 1419. When the user is an existing subscriber, approval associated with card registration may be performed without performing an additional authentication procedure (e.g., a user authentication procedure based on a message) for user identification.

In step 1421, the electronic device 1420 performs user authentication. The electronic device 1420 may perform user authentication based on various user authentication schemes, such as user biometric information, a PIN, or an authorized certificate. The electronic device 1420 may transmit authentication information (e.g., biometric information, a PIN, or an authorized certificate) acquired for the user authentication to the second server 1440, through the first server 1430.

In step 1423, the electronic device 1420 completes registration of the card related to the push message as an electronic card and manage the same, in response to a registration completion response from the second server 1440.

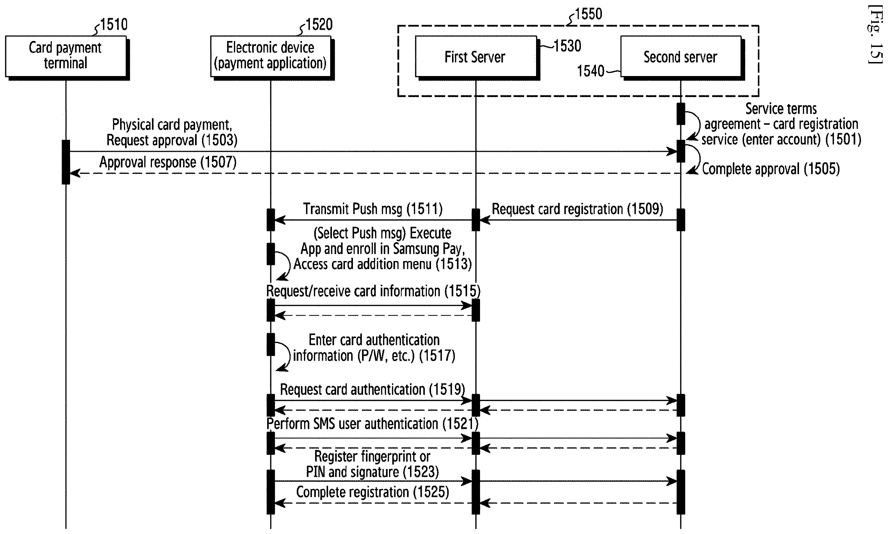

FIG. 15 illustrates a card registration procedure in a system according to an embodiment of the present disclosure.

Specifically, FIG. 15 illustrates an example of performing card registration for a new user based on a push message, in an electronic device 1520, a first server 1530 (e.g., a payment server), and a second server 1540 (e.g., a card company server).

In FIG. 15, the electronic device 1520, the first server 1530, the second server 1250, and the card payment terminal 1510 correspond to the electronic device 1420, the first server 1430, the second server 1440, and the card payment terminal 1410 of FIG. 14, and a detailed description thereof will be omitted.

Referring to FIG. 15, steps 1501, 1503, 1505, and 1507 correspond to steps 1401, 1403, 1405, and 1407, respectively, of FIG. 14, and a detailed description thereof will be omitted.

In step 1509, the second server 1540 transmits a card registration request for the card that was approved for card use to the first server 1530. The second server 1540 may transmit, to the first server 1530, card information associated with the card that was approved for card use together with the card registration request.

In step 1511, the first server 1530 receives the card registration request from the second server 1540, and transmits a push message for requesting card registration corresponding thereto to the electronic device 1520. For example, the first server 1530 may determine card registration by the electronic device 1520, in response to reception of the card registration request from the second server 1540, and may transmit, to the electronic device 1520, the push message that enables the card registration procedure to be performed by the electronic device 1520. The first server 1530 may store and manage card information received together with a request for card registration from the second server 1540.

In step 1513, the electronic device 1520 executes the payment application (e.g., execution in the background or execution in the foreground) in response to reception of the push message for card registration from the first server 1430, and performs a payment service (e.g., Samsung Pay^{™}) procedure for a new subscriber and a procedure of adding the card to the payment application (or a payment service). For example, the electronic device 1520 may display a user interface associated with the pay service subscription, through the payment application, process interaction with a user based on the user interface, and enable the user to subscribe to the payment service. When the user's payment service subscription is complete, the electronic device 1520 may access a card addition menu and function to cause the associated user interface to be displayed.

In step 1515, the electronic device 1520 requests the card information from the first server 1530, through a payment application, in response to the card registration request, and receives the card information from the first server 1530 in response to the request for the card information. For example, the electronic device 1520 may transmit a request message for requesting card information to the first server 1530, and the first server 1530 may transmit a response message including card information, which is received in advance from the second server 1540 and stored, to the electronic device 1520, in response to reception of the request message.

In step 1517, the electronic device 1520 requests a user (e.g., displays an associated user interface) to input card authentication information (e.g., biometric information, a password, a PIN, etc.) through the payment application, and acquires the card authentication information from the user.

In step 1519, the electronic device 1520 performs an operation associated with card authentication with the second server 1540 based on the card authentication information input by the user by the user. The electronic device 1520 may transmit a card authentication request to the second server 1540, through the first server 1530, based on the card authentication information, and the second server 1540 may transmit a card authentication response to the electronic device 1520 through the first server 1530, based on the card authentication information. Step 1521 may be performed directly without performing steps 1517 and 1519, and then the remaining operations may be performed. The electronic device 1520 may determine whether the user is an existing subscriber or a new subscriber based on a card authentication procedure corresponding to steps 1517 and 1519. When the user is a new subscriber, an additional authentication procedure (e.g., a user authentication procedure based on a message) for user identification may be optionally performed in order to improve security.

In step 1521, the electronic device 1520 performs a procedure for message-based (e.g., an SMS message) user authentication with the first server 1530 and the second server 1540, in response to confirmation that the user is a new subscriber. A message-based user authentication procedure is a known technology and a detailed description thereof will be omitted.

In step 1523, the electronic device 1520 performs user authentication. The electronic device 1520 may perform user authentication based on various user authentication schemes, such as user biometric information, a PIN, or an authorized certificate. The electronic device 1520 may transmit authentication information (e.g., biometric information, a PIN, or an authorized certificate) acquired for the user authentication to the second server 1540 through the first server 1530.

In step 1523, the electronic device 1520 completes registration of the card related to the push message as an electronic card and manages the same, in response to a registration completion response from the second server 1540.

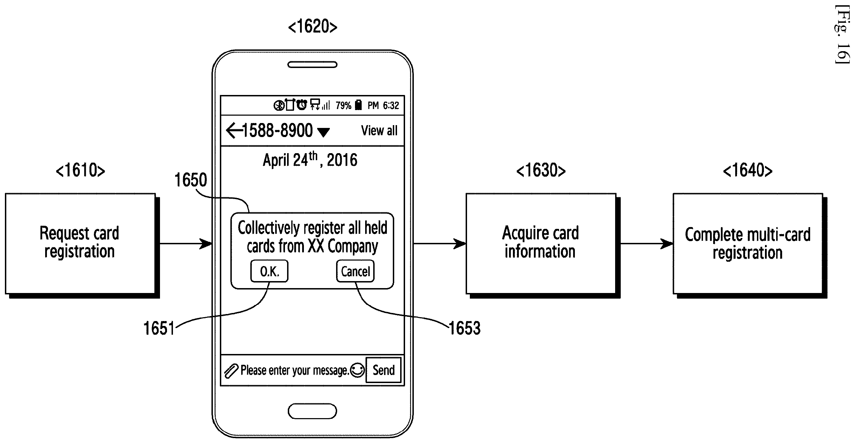

FIG. 16 illustrates an example of registration of a card in an electronic device according to an embodiment of the present disclosure. Specifically, FIG. 16 illustrates an example of registering multiple cards based on a message, after completing registration of at least one card as an electronic card.

Referring to FIG. 16, in step 1610, when an electronic card is registered based on card information, the electronic device determines whether or not to register an additional card.

The electronic device may determine to register an additional card in response to an additional card registration request based on a message (e.g., a push message for requesting additional card registration) of a card company server or a payment server. For example, as described above with reference to the drawings, an additional card registration procedure may be performed when completing card registration, or in response to reception of the message for requesting additional card registration from the card company server or the payment server. The additional card registration procedure may be performed by a request made by a user using the payment application after registration of at least one card. The additional card registration procedure may be performed in response to additional card menu selection by the user based on a card-related message.

FIG. 16 illustrates an example of registration of a card, and then registering an additional card in response to reception of a message for additional card registration from a card company server or a payment server. However, the present disclosure is not limited thereto, and multi-card registration may be provided using various schemes. For example, after completion of card registration, the card company server or the payment server may transmit a text message for prompting "registration of all cards held by a user", and the electronic device may display the received text message. For example, the electronic device may display the received message in the same manner as in FIG. 6. Thereafter, the electronic device may provide multi-card registration in response to the user's selection of the card registration menu 630 in the menu list 620 as illustrated in the example of FIG. 6.

In step 1620, the electronic device displays a guide 1650 (e.g., a menu or a pop-up message) for guiding additional card registration in response to message reception. The guide 1650 includes guide information prompting to register additional cards (e.g., registration of all cards of XX Company, held by a user), and a selection button for user identification (e.g., a first button 1651 (i.e., O.K.) and a second button 1653 (i.e., cancel)) for determining whether or not to register a card. For example, the user may have a plurality of different cards issued by a specific card company. The user may have a first card, a second card, a third card, etc., issued by card company S, and the first card has already been registered as an electronic card according to the above-described card registration procedure. Except for the first card held by the user, all of the other cards (e.g., the second card and the third card) belonging to card company S may be collectively registered.

When the user requests to collectively register all cards, the electronic device may acquire card information for each of the cards in step 1630. The electronic device may request card information for all remaining cards (e.g., the second card and the third card) from the card company server, and the card company server may respond to the electronic device in relation to card information for all remaining cards (e.g., the second card and the third card). The electronic device may acquire a plurality of pieces of card information for the plurality of cards, and may complete multi-card registration for the plurality of cards, via the remaining card registration procedures, in step 1640.

As illustrated in FIG. 16, after registering at least one card, the user may conveniently register all cards issued by the associated card company to the user as electronic cards, via a text request of the associated card company or a request of the payment server.

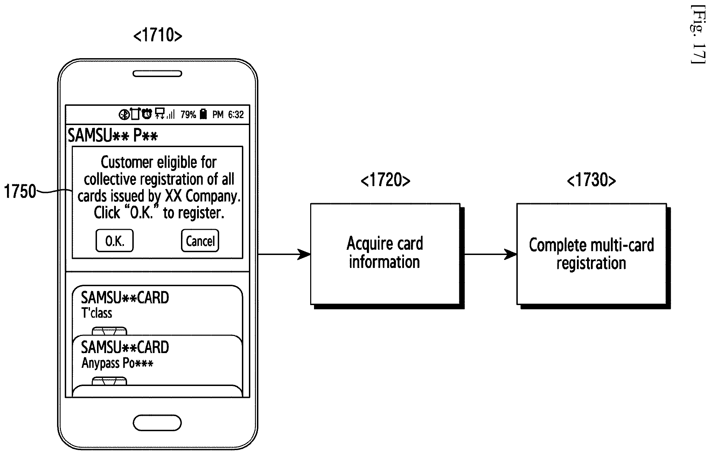

FIG. 17 illustrates an example of registration of a card in an electronic device according to an embodiments of the present disclosure.

Specifically, FIG. 17 illustrates an example of registering multiple cards based on a payment application (e.g., Samsung Pay^{™}) after completing registration of at least one card in an electronic device.

Referring to FIG. 17, in step 1710, the electronic device executes a payment application in response to user input for executing the payment application. When the payment application is executed, or when it is determined that a specific card is selected or used in the payment application, the electronic device provides a user with a guide 1750 (e.g., a pop-up message) for requesting determination of whether or not to register additional cards of a card company associated with the corresponding card. For example, the electronic device may output a pop-up message 1750 including guide information indicating "Customer eligible for collective registration of all cards issued by XX Company. Click "O.K." to register".

When the user requests to register all cards based on the pop-up message 1750, the electronic device acquires card information for each of the cards in step 1720. The electronic device may request card information for all remaining cards (e.g., the second card and the third card) from the card company server, and the card company server may respond to the electronic device in relation to card information for all remaining cards (e.g., the second card and the third card). The electronic device may acquire a plurality of pieces of card information for the plurality of cards, and may complete multi-card registration for the plurality of cards via the remaining card registration procedures in step 1730.

As illustrated in FIG. 17, after registering at least one card, the user may conveniently register all cards issued by the associated card company to the user, as electronic cards, via a pop-up message within the payment application.

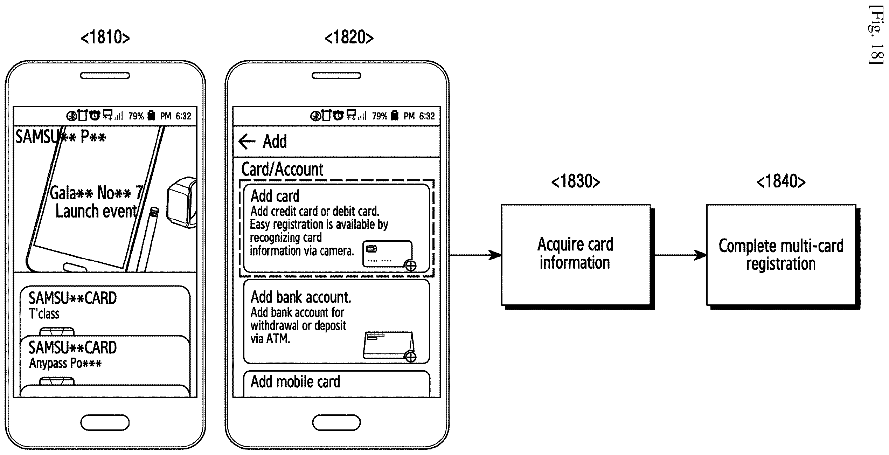

FIG. 18 illustrates an example of registration of a card in an electronic device according to an embodiment of the present disclosure.

Specifically, FIG. 18 illustrates an example of registering multiple cards by accessing a card addition menu in a payment application (e.g., Samsung Pay^{™}) after completing registration of at least one card as an electronic device.

Referring to FIG. 18, in step 1810, the payment application is executed in response to a user input for execution of the payment application.

In step 1820, the electronic device displays a setting page including selection menus of various schemes, which allow the addition of an electronic card in response to user selection of a card addition option in the payment application.

As illustrated in step 1820, the setting page includes a card addition menu for adding an electronic card corresponding to a physical card, such as a credit card or a debit card, a bank account addition menu for adding an electronic card corresponding to a bank account, and a mobile card addition menu which may cause a credit card or a debit card to be directly issued via the electronic device. The card addition menu, the bank account addition menu, and the mobile card addition menu may have guide information for each of the card addition schemes, and thus, may be independently configured. When a user wishes to additionally register a card in the electronic device, the user may select the card addition menu in the payment application and request card registration from the electronic device.

In the setting page, when the user requests card registration, the electronic device acquires card information for each of the cards in step 1830. The electronic device may request card information for all remaining cards (e.g., the second card and the third card) from the card company server, and the card company server may respond to the electronic device in relation to card information for all remaining cards (e.g., the second card and the third card). The electronic device acquires a plurality of pieces of card information for the plurality of cards, and may complete multi-card registration for the plurality of cards, via the remaining card registration procedures, in step 1840.

As illustrated in FIG. 18, after registering at least one card, the user may conveniently register all cards issued by the associated card company to the user, as electronic cards, via selection of the card addition menu within the payment application.

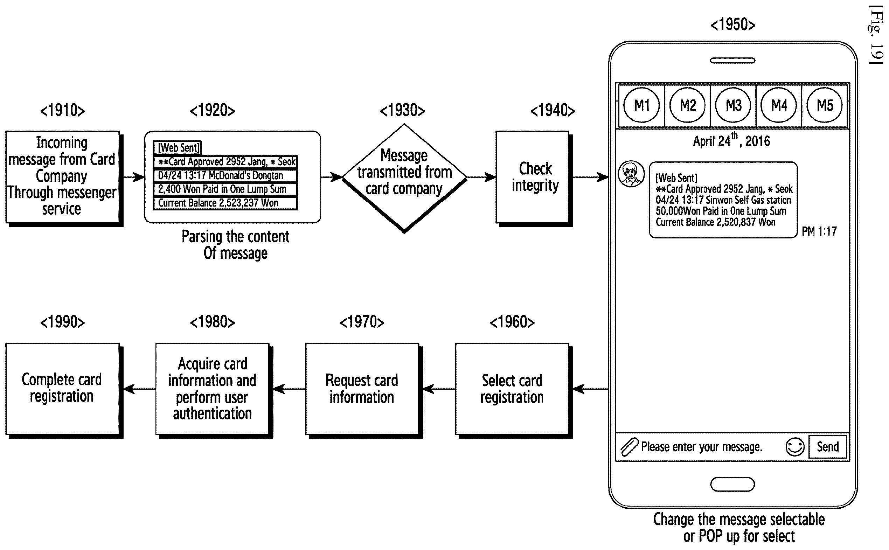

FIG. 19 illustrates an example of registration of a card in a system according to an embodiment of the present disclosure.

Referring to FIG. 19, in step 1910, the electronic device receives a message transmitted from a card company server via a messenger service. A card registration service may be provided based on a messenger service through the cooperation between the card company server and the messenger service provider. The electronic device may provide various messenger services corresponding to a messenger service provider that has entered into a service agreement for providing card-related messages from the card company.

In step 1920, the electronic device parses the content of a message received via the messenger service. For example, when message reception is detected through the messenger service, the electronic device may parse the content (e.g., characters in the message) of the received message.

In step 1930, the electronic device determines whether the received message was transmitted from the card company. For example, the electronic device may determine whether the received message is a card-related message transmitted from the card company server. The electronic device may extract card-associated information (e.g., a card company name, a user name (the full name or a part of the name), payment, a card number (all or part of the number), etc.) based on parsing of the message. When the card-associated information is extracted from the message, the electronic device may determine that the corresponding message is transmitted from the card company server.

In step 1940, when it is determined that the message is transmitted from the card company, the electronic device checks the integrity of the message by interworking with the payment server (or a messenger server).

In step 1950, while the message is displayed, the electronic device receives an input of card registration selection of step 1960 based on various schemes. The electronic device may display a list of various menus, which may be performed with respect to the message, in response to a user input (e.g., option selection, a long press on the message, etc.) while the message is displayed. The list of various menus may include a card registration menu for registration (or addition) in the electronic device. A user may request card registration from the electronic device based on the card registration menu selection of step 1960. The messenger service may include a card registration request link (or a card registration shortcut link) in the message and provide the link.

The user may request card registration from the electronic device based on selection of the card registration request link in the message, through the messenger service in step 1960.

In step 1970, when the user requests registration of the card, the electronic device requests card information from the server (e.g., a payment server and a card company server).

In step 1980, the electronic device acquires card information from the server and perform user authentication. The electronic device may use various user authentication schemes, such as user biometric information of the user, a password, a PIN, or an authorized certificate.

In step 1990, the electronic device completes card registration. For example, when user authentication is successful, the electronic device may register the card based on the card information.

As illustrated in FIG. 19, via cooperation between the card company and the messenger service provider, the card-related message may be provided through an associated message service, and the user may conveniently register the card through the messenger service.

When card registration is provided through cooperation between the card company and the messenger service provider, the card registration procedure based on a message may be directly performed without going through a message-parsing process based on an arrangement set in advance between the card company and the messenger service provider. The electronic device may directly perform step 1930, without performing step 1920 in FIG. 19.

As described above, an operation method of an electronic device according to an embodiment of the present disclosure may include detecting reception of a message; determining whether the message is a card-related message; when the message is a card-related message, determining whether to register a card related to the message as an electronic card; acquiring card information associated with the card related to the message in response to registration determination; and registering the card related to the message as an electronic card in the electronic device, by using the card information.

The message may be a message relating to a payment request or a card-use-related message including card-associated information, and the message may be configured to include a text message, a messenger message, a push message, an instant message, or an e-mail message.

The determining of whether the message is a card-related message may include: parsing a message to extract card-associated information; determining based on the card-associated information whether the message is transmitted by a set external server; and determining to proceed a card registration procedure based on the determination result.

The determining of whether the message is a card-related message may include determining whether the card has been previously registered in an electronic device.

The determining of whether the message is a card-related message may include: executing a payment application; requesting, through the payment application, an external server to confirm whether the card has been pre-registered; and determining whether the card has been previously registered based on the response from the external server.

The determining of whether the message is a card-related message may include comparing the card-associated information with card information of an electronic card that was previously registered in the electronic device and determining whether the card has been previously registered or not based on the result of the comparison.

The acquiring of the card information may include acquiring the card information from the payment server or a card company server.

The acquiring of the card information may include acquiring the card information through the card company server when card registration is performed through reception of a text message, and receiving card information, which is received from the card company server and stored in the payment server, when card registration is performed through a push message.

The registering of the card related to the message may include performing user authentication based on at least a part of biometric information or a PIN in response to acquisition of the card information.

The operation method may further include performing multi-card registration for another card associated with the card.

As described above, an electronic device according to various embodiments may include a wireless communication unit configured to perform wireless communication with an external server, and a processor functionally connected with the wireless communication unit, in which the processor is configured to: detect reception of a message; determine whether the message is a card-related message; when the message is a card-related message, determine whether to register a card related to the message as an electronic card; acquire card information associated with the card related to the message in response to registration determination; and register the card related to the message as an electronic card in the electronic device, by using the card information.

According to various embodiments, the message is a message relating to a payment request or a card-use-related message including card-associated information, and the message may be configured to include a text message, a messenger message, a push message, an instant message, or an e-mail message.

According to various embodiments, the processor may be configured to parse a message, extract card-associated information, determine based on the card-associated information whether the message is transmitted by a set external server, and proceed a card registration procedure based on a determination result.

According to various embodiments, the processor may be configured to determine whether the card has been previously registered as an electronic card.

According to various embodiments, the processor may be configured to execute a payment application, request the external server to confirm whether the card is a pre-registered card through the payment application, and determine whether the card is a pre-registered card based on a response from the external server.

According to various embodiments, the processor may be configured to compare the card-associated information with card information of an electronic card pre-registered in the electronic device and determine whether the card has been previously registered based on the result of the comparison.

According to various embodiments, the processor may be configured to acquire the card information from a payment server or a card company server.

According to various embodiments, the processor may be configured to acquire the card information through the card company server when card registration is performed through reception of a text message, and acquire card information, which is received from the card company server and stored in the payment server, when card registration is performed through a push message.

According to various embodiments, the processor may be configured to perform user authentication based on at least a part of biometric information or a personal identification number (PIN), in response to acquisition of the card information.

According to various embodiments, the processor may be configured to complete the card registration and perform multi-card registration for another card associated with the card.

In an electronic device and an operation method thereof according to the above-described embodiments, user convenience may be improved when a physical card is registered as an electronic card and managed using the electronic device. Regardless of the age and technical know-how of a user, the physical card may be registered as an electronic card more conveniently and easily in an electronic payment service application merely through text verification. Therefore, it is possible to provide convenience in registration and use of the electronic card to the user.

Easy registration of a payment card, a reward card, etc., for mobile payment or online payment may be achieved, whereby it may be possible to easily induce introduction of new users and induce existing users to continue to use a service. Based on the user's agreement, when online/offline payment is performed using a physical card, an associated server (e.g., a card company server) may automatically request card registration in the electronic device or in a payment service application of the electronic device, whereby access to service may be improved. The electronic device may contribute to improving the usability, convenience, and competitiveness thereof.

While the present disclosure has been particularly shown and described with reference to certain embodiments thereof, it will be understood by those of ordinary skill in the art that various changes in form and details may be made therein without departing from the scope of the present disclosure as defined by the following claims

## Claims

1. An electronic device (101,201), comprising:
a wireless communication circuit;
a display; and
a processor (210) configured to:
control the wireless communication circuit to receive a messenger message through a first messenger service among at least one messenger service, wherein the messenger message includes payment information based on using a physical credit card and card-associated information including a portion of a card number of the physical credit card, transmitted from a server;
display the messenger message with a messenger selection area (720) in which the at least one messenger service is selected in a toggle scheme, wherein the at least one messenger service has a service affiliation to provide a card-related message of a card company;
determine whether the card-associated information corresponds to first card information pre-registered in the electronic device;
in response to the card-associated information included in the received message not corresponding to the first card information, output a first guide for registration of the physical credit card in the electronic device;
upon detecting a first user input for a card registration approval on the first guide, control the wireless communication circuit to request second card information corresponding to the physical credit card based at least on the portion of the card number and a sender of the message included in the received message, to the server;
acquire the second card information corresponding to the physical credit card from the server;
register an electronic card corresponding to the physical credit card in the electronic device, by using the acquired second card information;
after registering the electronic card, receive a message for registering other credit cards of a user of the electronic device;
in response to receiving the message for registering the other credit cards of the user of the electronic device, display a second guide (1650) for guiding additional card registrations of the other credit cards; and
based on a second user input to the second guide, register the other credit cards of the user of the electronic device together.

2. The electronic device of claim 1, wherein the processor is further configured to:
execute a payment application as a background application;
request a card management server to confirm whether the physical credit card is a pre-registered card, through the payment application; and
determine whether the physical credit card is a pre-registered card based on a response from the card management server.

3. The electronic device of claim 1,
wherein the processor is further configured to perform user authentication based on at least one of biometric information and a personal identification number (PIN), after acquiring the card information.

4. A method of registering an electronic card by an electronic device, the method comprising:
controlling the wireless communication circuit to receive a messenger message through a first messenger service among at least one messenger service, wherein the messenger message includes payment information based on using a physical credit card and card-associated information including a portion of a card number of the physical credit card, transmitted from a server;
displaying the messenger message with a messenger selection area (720) in which the at least one messenger service is selected in a toggle scheme, wherein the at least one messenger service has a service affiliation to provide a card-related message of a card company;
determining whether the card-associated information corresponds to first card information pre-registered in the electronic device;
in response to the card-associated information included in the received message does corresponding to the first card information, outputting a first guide for registration of the physical credit card in the electronic device;
upon detecting a first user input for a card registration approval on the first guide, controlling the wireless communication circuit to request second card information corresponding to the physical credit card based at least on the portion of the card number and a sender of the message included in the received message, to the server;
acquiring the second card information corresponding to the physical credit card from the server; and
registering an electronic card corresponding to the physical credit card in the electronic device, by using the acquired second card information;
after registering the electronic card, receiving a message for registering other credit cards of a user of the electronic device;
in response to receiving the message for registering the other credit cards of the user of the electronic device, displaying a second guide (1650) for guiding additional card registrations of the other credit cards; and
based on a second user input to the second guide, registering the other credit cards of the user of the electronic device together.

5. The method of claim 4,
executing a payment application as a background application;
requesting, through the payment application, a card management server to confirm whether the physical credit card is a pre-registered card; and
determining whether the physical credit card is already registered as the electronic card, based on a response from the card management server.

6. The method of claim 4, wherein registering the card comprises performing user authentication based on at least one of biometric information and a personal identification number (PIN), in response to acquiring the card information.

## Patentansprüche

1. Elektronische Vorrichtung (101, 201), umfassend:
eine drahtlose Kommunikationsschaltung;
eine Anzeige; und
einen Prozessor (210), der zu Folgendem konfiguriert ist:
Steuern der drahtlosen Kommunikationsschaltung, um eine Messenger-Nachricht über einen ersten Messenger-Dienst aus mindestens einem Messenger-Dienst zu empfangen, wobei die Messenger-Nachricht Zahlungsinformationen basierend auf der Verwendung einer physischen Kreditkarte und kartenassoziierte Informationen, einschließlich eines Teils einer Kartennummer der physischen Kreditkarte, die von einem Server übertragen werden, enthält;
Anzeigen der Messenger-Nachricht mit einem Messenger-Auswahlbereich (720), in dem der mindestens eine Messenger-Dienst in einem Umschaltschema ausgewählt ist, wobei der mindestens eine Messenger-Dienst eine Dienstzugehörigkeit aufweist, um eine kartenbezogene Nachricht eines Kartenunternehmens bereitzustellen;
Bestimmen, ob die kartenassoziierten Informationen den in der elektronischen Vorrichtung vorab registrierten ersten Karteninformationen entsprechen;
als Reaktion darauf, dass die in der empfangenen Nachricht enthaltenen kartenassoziierten Informationen nicht den ersten Karteninformationen entsprechen, Ausgeben einer ersten Anleitung zur Registrierung der physischen Kreditkarte in der elektronischen Vorrichtung;
beim Erkennen einer ersten Benutzereingabe für eine Kartenregistrierungsgenehmigung auf der ersten Anleitung, Steuern der drahtlosen Kommunikationsschaltung, um zweite Karteninformationen, die der physischen Kreditkarte entsprechen, basierend mindestens auf dem Teil der Kartennummer und einem Absender der Nachricht, der in der empfangenen Nachricht enthalten ist, bei dem Server anzufordern;
Abrufen der zweiten Karteninformationen, die der physischen Kreditkarte entsprechen, von dem Server;
Registrieren einer der physischen Kreditkarte entsprechenden elektronischen Karte in der elektronischen Vorrichtung unter Verwendung der abgerufenen zweiten Karteninformationen;
nach dem Registrieren der elektronischen Karte, Empfangen einer Nachricht zum Registrieren anderer Kreditkarten eines Benutzers der elektronischen Vorrichtung;
als Reaktion auf das Empfangen der Nachricht zum Registrieren der anderen Kreditkarten des Benutzers der elektronischen Vorrichtung, Anzeigen einer zweiten Anleitung (1650) zum Anleiten zusätzlicher Kartenregistrierungen der anderen Kreditkarten; und
basierend auf einer zweiten Benutzereingabe in die zweite Anleitung, Registrieren der anderen Kreditkarten des Benutzers der elektronischen Vorrichtung gemeinsam.

2. Elektronische Vorrichtung nach Anspruch 1, wobei der Prozessor ferner zu Folgendem konfiguriert ist:
Ausführen einer Zahlungsanwendung als Hintergrundanwendung;
Anfordern eines Kartenverwaltungsservers, zu bestätigen, ob die physische Kreditkarte eine vorab registrierte Karte ist, über die Zahlungsanwendung; und
Bestimmen, ob die physische Kreditkarte eine vorab registrierte Karte ist, basierend auf einer Antwort von dem Kartenverwaltungsserver.

3. Elektronische Vorrichtung nach Anspruch 1,
wobei der Prozessor ferner dazu konfiguriert ist, nach dem Abrufen der Karteninformationen eine Benutzerauthentifizierung basierend auf mindestens einem von biometrischen Informationen und einer persönlichen Identifikationsnummer (PIN) durchzuführen.

4. Verfahren zum Registrieren einer elektronischen Karte durch eine elektronische Vorrichtung, wobei das Verfahren Folgendes umfasst:
Steuern der drahtlosen Kommunikationsschaltung, um eine Messenger-Nachricht über einen ersten Messenger-Dienst aus mindestens einem Messenger-Dienst zu empfangen, wobei die Messenger-Nachricht Zahlungsinformationen basierend auf der Verwendung einer physischen Kreditkarte und kartenassoziierte Informationen, einschließlich eines Teils einer Kartennummer der physischen Kreditkarte, die von einem Server übertragen werden, enthält;
Anzeigen der Messenger-Nachricht mit einem Messenger-Auswahlbereich (720), in dem der mindestens eine Messenger-Dienst in einem Umschaltschema ausgewählt ist, wobei der mindestens eine Messenger-Dienst eine Dienstzugehörigkeit aufweist, um eine kartenbezogene Nachricht eines Kartenunternehmens bereitzustellen;
Bestimmen, ob die kartenassoziierten Informationen den in der elektronischen Vorrichtung vorab registrierten ersten Karteninformationen entsprechen;
als Reaktion darauf, dass die in der empfangenen Nachricht enthaltenen kartenassoziierten Informationen den ersten Karteninformationen entsprechen, Ausgeben einer ersten Anleitung zur Registrierung der physischen Kreditkarte in der elektronischen Vorrichtung;
beim Erkennen einer ersten Benutzereingabe für eine Kartenregistrierungsgenehmigung auf der ersten Anleitung, Steuern der drahtlosen Kommunikationsschaltung, um zweite Karteninformationen, die der physischen Kreditkarte entsprechen, basierend mindestens auf dem Teil der Kartennummer und einem Absender der Nachricht, der in der empfangenen Nachricht enthalten ist, bei dem Server anzufordern;
Abrufen der zweiten Karteninformationen, die der physischen Kreditkarte entsprechen, von dem Server; und
Registrieren einer der physischen Kreditkarte entsprechenden elektronischen Karte in der elektronischen Vorrichtung unter Verwendung der abgerufenen zweiten Karteninformationen;
nach dem Registrieren der elektronischen Karte, Empfangen einer Nachricht zum Registrieren anderer Kreditkarten eines Benutzers der elektronischen Vorrichtung;
als Reaktion auf das Empfangen der Nachricht zum Registrieren der anderen Kreditkarten des Benutzers der elektronischen Vorrichtung, Anzeigen einer zweiten Anleitung (1650) zum Anleiten zusätzlicher Kartenregistrierungen der anderen Kreditkarten; und
basierend auf einer zweiten Benutzereingabe in die zweite Anleitung, Registrieren der anderen Kreditkarten des Benutzers der elektronischen Vorrichtung gemeinsam.

5. Verfahren nach Anspruch 4,
Ausführen einer Zahlungsanwendung als Hintergrundanwendung;
Anfordern eines Kartenverwaltungsservers, zu bestätigen, ob die physische Kreditkarte eine vorab registrierte Karte ist, über die Zahlungsanwendung; und
Bestimmen, ob die physische Kreditkarte bereits als die elektronische Karte registriert ist, basierend auf einer Antwort von dem Kartenverwaltungsserver.

6. Verfahren nach Anspruch 4, wobei das Registrieren der Karte Durchführen einer Benutzerauthentifizierung basierend auf mindestens einem von biometrischen Informationen und einer persönlichen Identifikationsnummer (PIN) als Reaktion auf das Abrufen der Karteninformationen umfasst.

## Revendications

1. Dispositif électronique (101, 201) comprenant :
un circuit de communication sans fil ;
un affichage ; et
un processeur (210) configuré pour :
commander au circuit de communication sans fil de recevoir un message de messagerie via un premier service de messagerie parmi au moins un service de messagerie, dans lequel le message de messagerie comprend des informations de paiement sur la base de l'utilisation d'une carte de crédit physique et des informations associées à la carte comprenant une portion d'un numéro de carte de la carte de crédit physique, transmises à partir d'un serveur ;
afficher le message de messagerie avec une zone de sélection de messagerie (720) dans laquelle l'au moins un service de messagerie est sélectionné dans un schéma à bascule, dans lequel l'au moins un service de messagerie comporte une affiliation de service pour délivrer un message en rapport avec une carte d'une société de cartes ;
déterminer si les informations associées à la carte correspondent aux premières informations de carte préenregistrées dans l'appareil électronique ;
en réponse au fait que les informations associées à la carte comprises dans le message reçu ne correspondent pas aux premières informations de carte, émettre un premier guide pour l'enregistrement de la carte de crédit physique dans le dispositif électronique ;
lors de la détection d'une première entrée d'utilisateur pour une approbation d'enregistrement de carte sur le premier guide, commander au circuit de communication sans fil de demander des secondes informations de carte correspondant à la carte de crédit physique sur la base au moins de la portion du numéro de carte et d'un expéditeur du message compris dans le message reçu, au serveur ;
acquérir les secondes informations de carte correspondant à la carte de crédit physique à partir du serveur ;
enregistrer une carte électronique correspondant à la carte de crédit physique dans le dispositif électronique, en utilisant les secondes informations de carte acquises ;
après avoir enregistré la carte électronique, recevoir un message pour enregistrer d'autres cartes de crédit d'un utilisateur du dispositif électronique ;
en réponse à la réception du message d'enregistrement des autres cartes de crédit de l'utilisateur du dispositif électronique, afficher un second guide (1650) pour guider des enregistrements de cartes supplémentaires des autres cartes de crédit ; et
sur la base d'une seconde entrée d'utilisateur dans le second guide, enregistrer les autres cartes de crédit de l'utilisateur de l'appareil électronique ensemble.

2. Dispositif électronique de la revendication 1, dans lequel le processeur est en outre configuré pour :
exécuter une application de paiement en tant qu'application d'arrière-plan ;
demander à un serveur de gestion de cartes de confirmer si la carte de crédit physique est une carte préenregistrée, via l'application de paiement ; et
déterminer si la carte de crédit physique est une carte préenregistrée sur la base d'une réponse de la part du serveur de gestion de cartes.

3. Dispositif électronique de la revendication 1,
dans lequel le processeur est en outre configuré pour réaliser une authentification d'utilisateur sur la base d'au moins l'un parmi une information biométrique et un numéro d'identification personnel (PIN), après l'acquisition des informations de carte.

4. Procédé d'enregistrement d'une carte électronique par un dispositif électronique, le procédé comprenant :
la commande au circuit de communication sans fil de recevoir un message de messagerie via un premier service de messagerie parmi au moins un service de messagerie, dans lequel le message de messagerie comprend des informations de paiement sur la base de l'utilisation d'une carte de crédit physique et des informations associées à la carte comprenant une portion d'un numéro de carte de la carte de crédit physique, transmises à partir d'un serveur ;
l'affichage du message de messagerie avec une zone de sélection de messagerie (720) dans laquelle l'au moins un service de messagerie est sélectionné dans un schéma à bascule, dans lequel l'au moins un service de messagerie comporte une affiliation de service pour délivrer un message en rapport avec une carte d'une société de cartes ;
la détermination si les informations associées à la carte correspondent à des premières informations de carte préenregistrées dans le dispositif électronique ;
en réponse au fait que les informations associées à la carte comprises dans le message reçu correspondent aux premières informations de carte, l'émission d'un premier guide pour l'enregistrement de la carte de crédit physique dans le dispositif électronique ;
lors de la détection d'une première entrée d'utilisateur pour une approbation d'enregistrement de carte sur le premier guide, la commande au circuit de communication sans fil de demander des secondes informations de carte correspondant à la carte de crédit physique sur la base au moins de la portion du numéro de carte et d'un expéditeur du message compris dans le message reçu, au serveur ;
l'acquisition des secondes informations de carte correspondant à la carte de crédit physique à partir du serveur ; et
l'enregistrement d'une carte électronique correspondant à la carte de crédit physique dans le dispositif électronique, en utilisant les secondes informations de carte acquises ;
après l'enregistrement de la carte électronique, la réception d'un message pour l'enregistrement d'autres cartes de crédit d'un utilisateur de l'appareil électronique ;
en réponse à la réception du message d'enregistrement des autres cartes de crédit de l'utilisateur du dispositif électronique, l'affichage d'un second guide (1650) pour guider des enregistrements de cartes supplémentaires des autres cartes de crédit ; et
sur la base d'une seconde entrée d'utilisateur dans le second guide, l'enregistrement des autres cartes de crédit de l'utilisateur de l'appareil électronique ensemble.

5. Procédé de la revendication 4,
exécutant une application de paiement en tant qu'application d'arrière-plan ;
demandant, via l'application de paiement, à un serveur de gestion de cartes de confirmer si la carte de crédit physique est une carte préenregistrée ; et
déterminant si la carte de crédit physique est déjà enregistrée en tant que carte électronique, sur la base d'une réponse de la part du serveur de gestion de cartes.

6. Procédé de la revendication 4, dans lequel l'enregistrement de la carte comprend la réalisation d'une authentification d'utilisateur sur la base d'au moins l'un parmi des informations biométriques et un numéro d'identification personnel (PIN), en réponse à l'acquisition des informations de carte.
